# EUROPEAN PATENT SPECIFICATION

(11) **EP 2 374 647 B1**
(45) Date of publication and mention of the grant of the patent: **11.09.2013**
(21) Application number: 11161442.6
(22) Date of filing: 07.04.2011
(51) Int. Cl.: B60K 6/365, B60K 6/48

(54) **Dual gear train driving structure at input side of basin-type gear**
Doppelte Antriebsstruktur an der Antriebsseite eines Tellerrades
Double train d'engrenage du côté entrée d'un engrenage de type bassin

(30) Priority: 07.04.2010 US 662258
(43) Date of publication of application: 12.10.2011
(73) Proprietor: Yang, Tai-Her, Si-Hu Town Dzan-Hwa (TW)
(72) Inventor: Yang, Tai-Her, Si-Hu Town Dzan-Hwa (TW)
(74) Representative: Wright, Howard Hugh Burnby

(56) References cited:
- EP-A1- 1 787 846
- US-A- 5 489 001

## Description

### BACKGROUND OF THE INVENTION

### (a) Field of the invention

For the dual gear train driving structure at input side of basin-type gear of the present invention, the differential gear set input rocker arm driven by the basin-type bevel gear in the differential gear set assembly is made to be driven by two sets of transmissions, in which the first transmission transmits the rotary kinetic energy between the differential gear set input rocker arm and the engine, the second transmission transmits the rotary kinetic energy between the differential gear set input rocker arm and the second driving unit, and one or both of the transmissions drives the differential gear set input rocker arm.

### (b) Description of the Prior Art

Traditionally, for the hybrid drive system, in which the basin-type bevel gear of the differential gear set assembly drives the differential gear set, the drive bevel gear at the input side of the differential gear set usually couples with the basin-type bevel gear to form the first transmission, to transmit the power from the engine, and the bevel gear driven by the second driving unit, such as the electric machinery, couples with the same basin-type bevel gear to transmit the kinetic energy between itself and the electric machinery, and the shortcomings are that the basin-type bevel gear driven by the kinetic energy of the electric machinery of the second driving unit and the engine is transmitted by the input bevel gear, thus the speed ratio is limited to be the same with that of the input side of the engine, and the bevel gear must be the same with another coupled input bevel gear driven by the rotary kinetic energy of the engine.

EP 1787846A (figs. 1 and 2) and US5489001 A (fig. 5) disclose examples of driving structures with intermediate transmission(s) interposed between the respective driving unit and the basin-type bevel gear of the differential.

### SUMMARY OF THE INVENTION

Traditionally, for the hybrid drive system, in which the basin-type bevel gear of the differential gear set assembly drives the differential gear set, the drive bevel gear at the input side of the differential gear set usually couples with the basin-type bevel gear to form the first transmission, to transmit the power from the engine, and the bevel gear driven by the second driving unit, such as the electric machinery, couples with the same basin-type bevel gear to transmit the kinetic energy between itself and the electric machinery, and the shortcomings are that the basin-type bevel gear driven by the kinetic energy of the electric machinery of the second driving unit and the engine is transmitted by the input bevel gear, thus the speed ratio is limited to be the same with that of the input side of the engine, and the bevel gear must be the same with another coupled input bevel gear driven by the rotary kinetic energy of the engine;

For the dual gear train driving structure at input side of basin-type gear of the present invention, the differential gear set input rocker arm driven by the basin-type bevel gear for the function of transmission, in the differential gear set assembly, is made to be driven by two sets of transmissions, in which the first transmission transmits the rotary kinetic energy between the differential gear set input rocker arm and the engine, the second transmission transmits the rotary kinetic energy between the differential gear set input rocker arm and the second driving unit, and one or both of the transmissions drives the differential gear set input rocker arm.

For the dual gear train driving structure at input side of basin-type gear, the second driving unit is used for the operations of the motor and/or the power generation function through powered electric machinery, or the fluid force rotary driving unit driven by hydraulic pressure or atmospheric pressure, or the rotary driving unit driven by flywheel or spring is used to be the second driving unit.

### BRIEF DESCRIPTION OF THE DRAWINGS

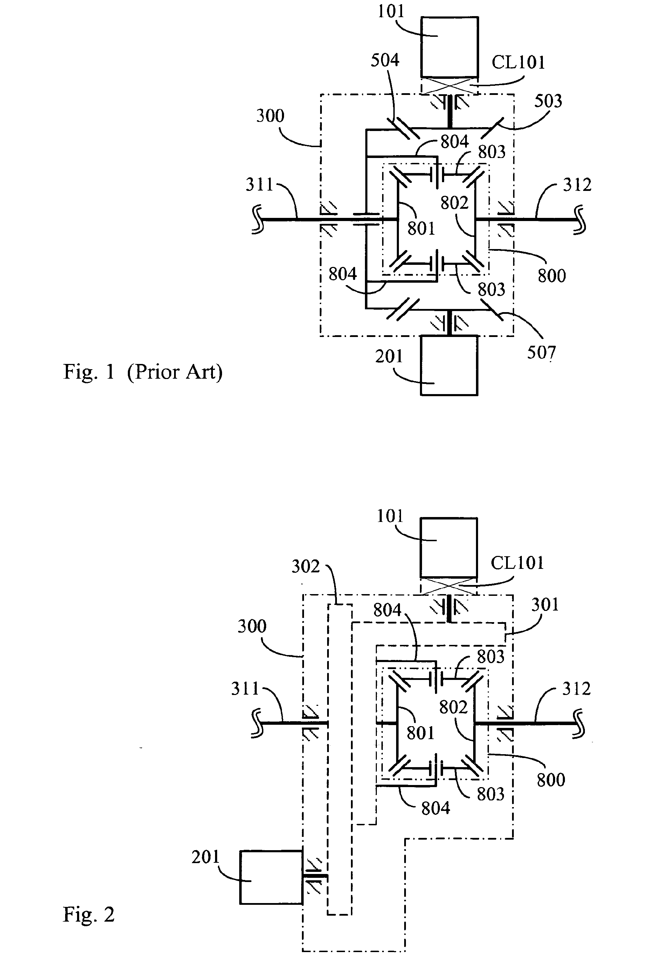

Fig. 1 is a structural schematic diagram showing the conventional basin-type bevel gear, which is together driven by the bevel gear driven by the engine and the bevel gear driven by the second driving unit.
Fig. 2 is a structural schematic diagram showing the main components of the dual gear train driving structure at input side of basin-type gear, not comprised in the present invention.

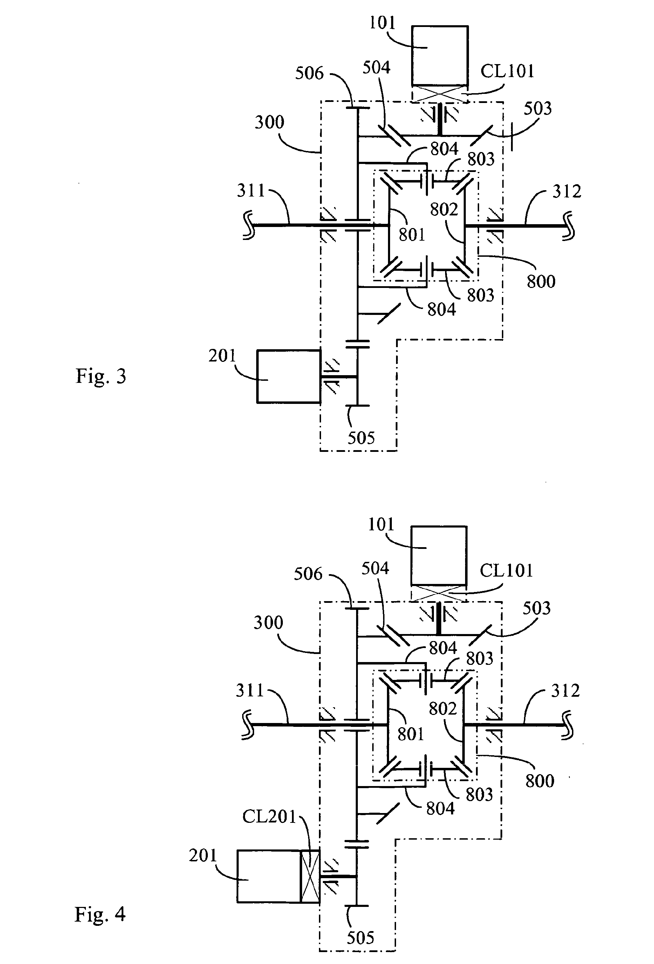

Fig. 3 is a structural schematic diagram showing that the rotary part of electric machinery constituting single set of the second driving unit (201) drives the transmission gear of the second transmission (506) through second transmission input gear (505), and along with the basin-type bevel gear of the first transmission (504) individually or together drive the umbrella-type planetary gear power transmission rocker arm (804), not comprised in the present invention.
Fig. 4 is a structural schematic diagram showing the embodiment that the clutch unit (CL201) is installed between the output terminal of the rotary part of the electric machinery constituting single set of the second driving unit (201) and the second transmission input gear (505) in Fig. 3.

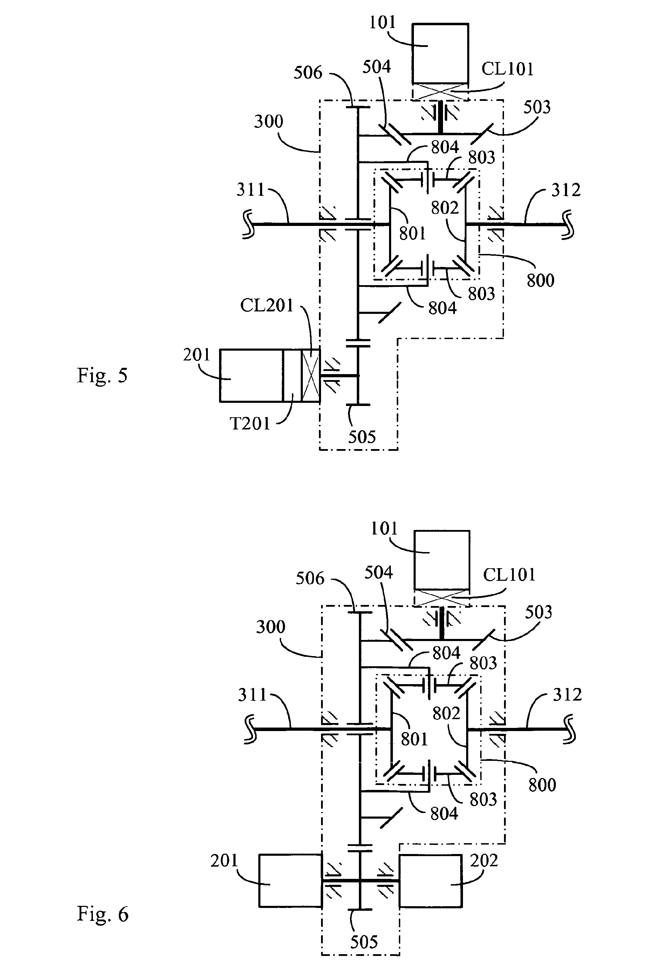

Fig. 5 is a structural schematic diagram showing the embodiment that two sets of the output terminals of the rotary part of the electric machinery constituting the second driving unit (201) in Fig. 3 is through the speed variable transmission (T201) and then through the controllable clutch unit (CL201) connected to the second transmission input gear (505) in Fig. 3.
Fig. 6 is a structural schematic diagram showing the embodiment that two electric machineries constituting the second driving units (201) and (202) are further installed to the embodiment of Fig. 3 for commonly driving the input terminal of the second transmission (302), according to the present invention.

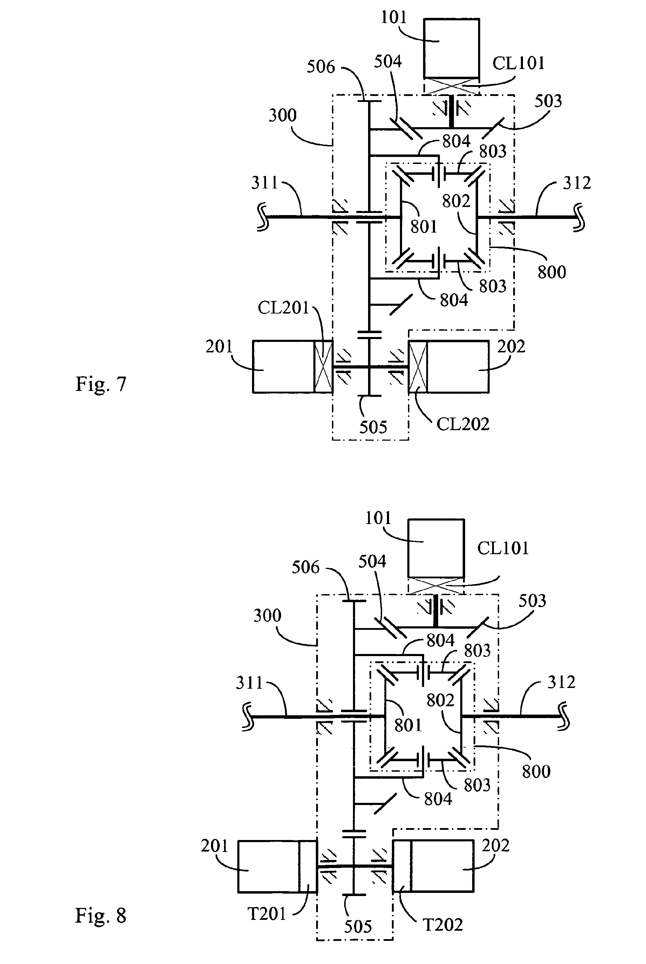

Fig. 7 is a structural schematic diagram showing the embodiment that two electric machineries constituting the second driving units (201) and (202) are further installed to the embodiment of Fig. 4, and the two controllable clutch units (CL201) and (CL202) are individually installed between each of the output terminals of the rotary parts of the two electric machineries and the second transmission input gear (505).
Fig. 8 is a structural schematic diagram showing the embodiment that two electric machineries constituting the second driving units (201) and (202) are further installed to the embodiment of Fig. 7, and the two speed variable transmissions (T201) and (T202) are individually installed between each of the output terminals of the rotary parts of the two electric machineries and the second transmission input gear (505).

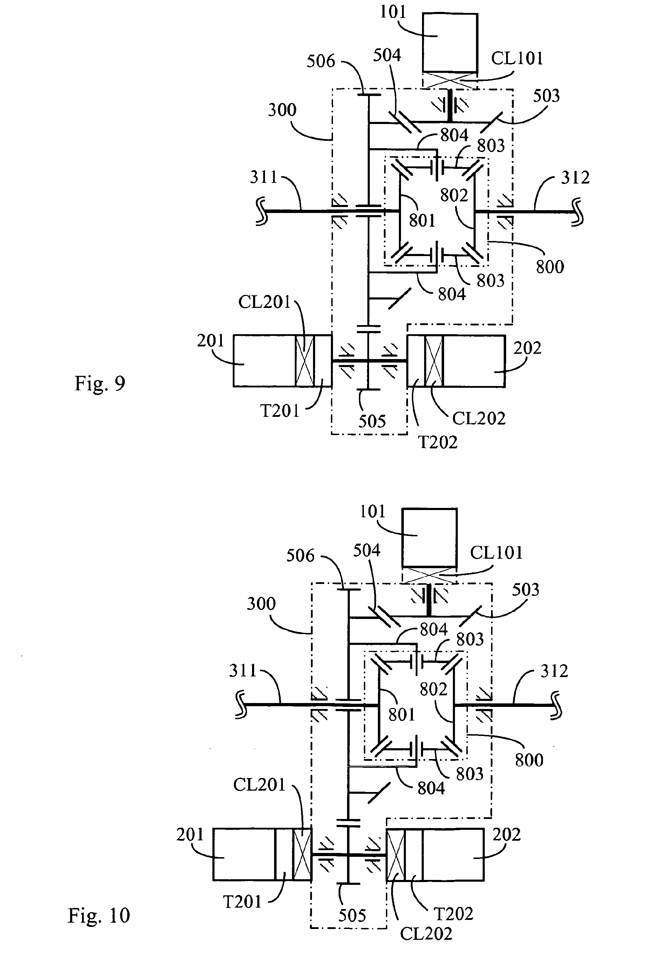

Fig. 9 is a structural schematic diagram showing the embodiment that two electric machineries constituting the second driving units (201) and (202) are further installed to the embodiment of Fig. 7, and the output terminals of the rotary parts of the two electric machineries are individually through the controllable clutch units (CL201) and (CL202) and then through the speed variable transmissions (T201) and (T202) connected to the second transmission input gear (505).
Fig. 10 is a structural schematic diagram showing the embodiment that two electric machineries constituting the second driving units (201) and (202) are further installed in the embodiment of Fig. 7, and the output terminals of the rotary parts of the two electric machineries are individually through the speed variable transmissions (T201) and (T202) and then through the controllable clutch units (CL201) and (CL202) connected to the second transmission input gear (505).

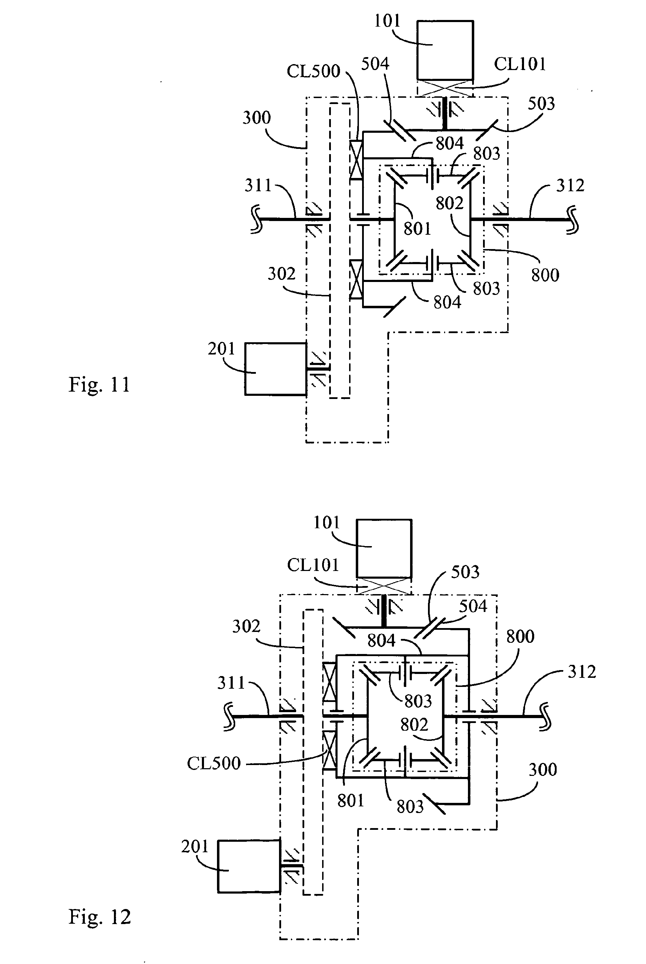

Fig. 11 is a structural schematic diagram showing the embodiment that the output terminal of the rotary part of electric machinery constituting the single set of the second driving unit (201) couples with the basin-type bevel gear of the first transmission (504) through the second transmission (302) and the controllable clutch unit (CL500), and then connects with the umbrella-type planetary gear power transmission rocker arm (804), according to the present invention.
Fig. 12 is a structural schematic diagram showing the embodiment that the second transmission (302) driven by the output terminal of the rotary part of the electric machinery constituting the single set of the second driving unit (201) combines with the umbrella-type planetary gear power transmission rocker arm (804) at left side of the differential gear set (800) through the controllable clutch unit (CL500), while the umbrella-type planetary gear power transmission rocker arm (804) at right side rightward extends and combines with the basin-type bevel gear of the first transmission (504), and is subject to be driven by the first driving unit (101) through the first transmission input bevel gear (503), according to the present invention.

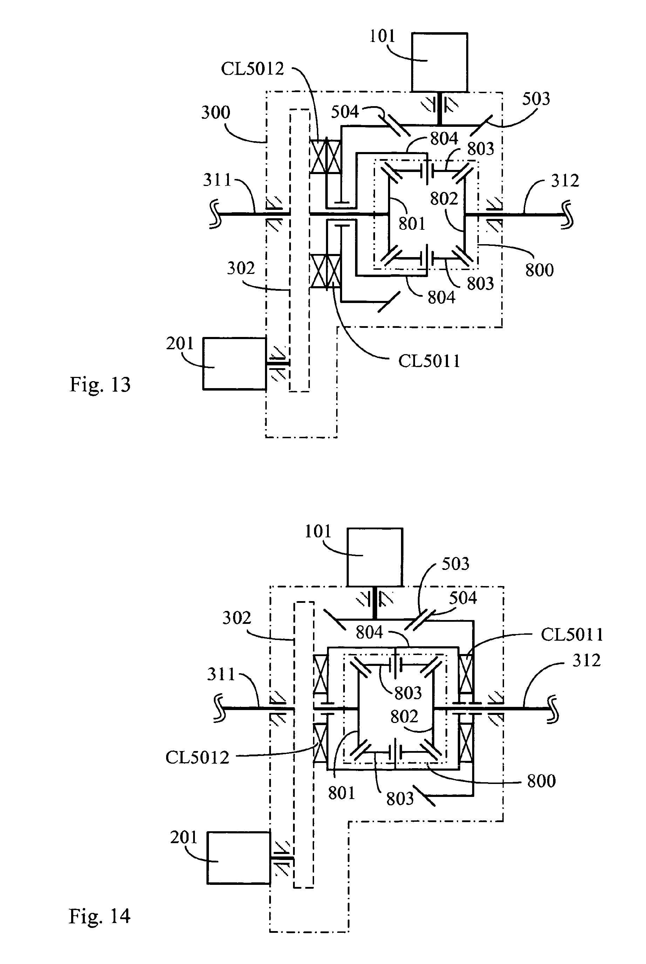

Fig. 13 is a structural schematic diagram showing the embodiment that the controllable clutch unit (CL5011) is installed between the umbrella-type planetary gear power transmission rocker arm (804) and the driving wheel group of the first transmission (301), and the controllable clutch unit (CL5012) is installed between the umbrella-type planetary gear power transmission rocker arm (804) and the driving wheel group of the second transmission (302), according to the present invention.
Fig. 14 is a structural schematic diagram showing the embodiment that the second driving unit (201) constituted by the single electric machinery drives the input terminal of the second transmission (302), and the umbrella-type planetary gear power transmission rocker arm (804) is installed at two sides of the differential gear set (800), in which the controllable clutch unit (CL5011) is installed between one side of the umbrella-type planetary gear power transmission rocker arm (804) and the basin-type bevel gear of the first transmission (504), while the controllable clutch unit (CL5012) is installed between the other side of the umbrella-type planetary gear power transmission rocker arm (804) and the second transmission (302), according to the present invention.

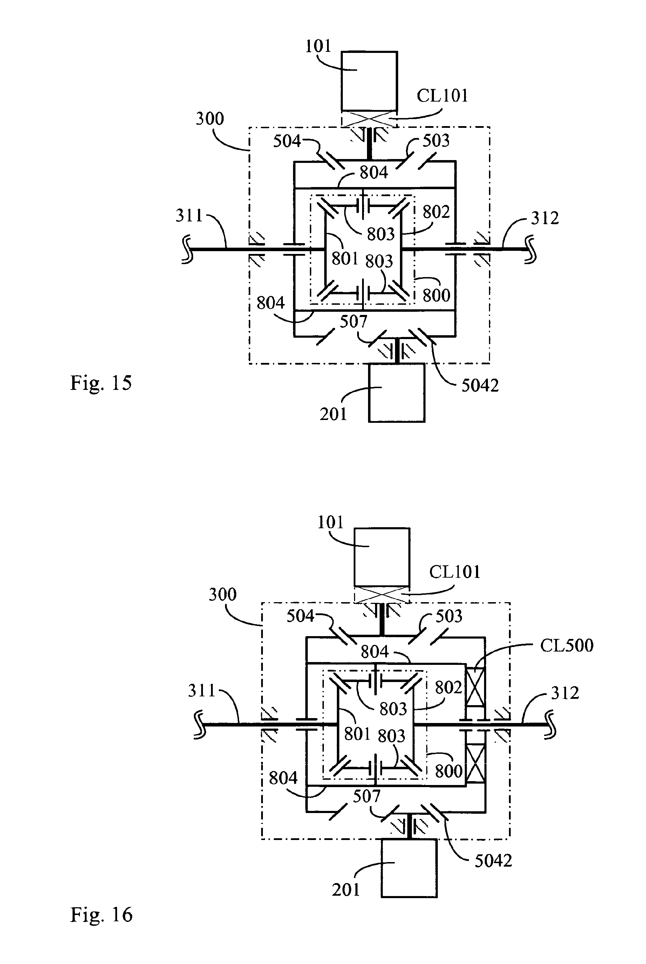

Fig. 15 is a structural schematic diagram showing the embodiment that single electric machinery constitutes the second driving unit (201) for driving the second transmission input bevel gear (507) at the input terminal of the second transmission (302), the umbrella-type planetary gear power transmission rocker arm (804) of the differential gear set (800) extends toward two sides, the basin-type bevel gear of the first transmission (504) and the first transmission input bevel gear (503), and the basin-type bevel gear of the second transmission (5042) and the second transmission input bevel gear (507) are installed, and the two sets are in separation, according to the present invention.
Fig. 16 is a structural schematic diagram showing the embodiment that the single electric machinery constitutes the second driving unit (201) for driving the second transmission input bevel gear (507) at the input terminal of the second transmission (302), the umbrella-type planetary gear power transmission rocker arm (804) of the differential gear set (800) extends toward two sides, the basin-type bevel gear of the first transmission (504) and the first transmission input bevel gear (503), and the basin-type bevel gear of the second transmission (5042) and the second transmission input bevel gear (507) are installed, the two sets are in separation, and the controllable clutch unit (CL500) is installed between the basin-type bevel gear of the second transmission (5042) and the umbrella-type planetary gear power transmission rocker arm (804), according to the present invention.

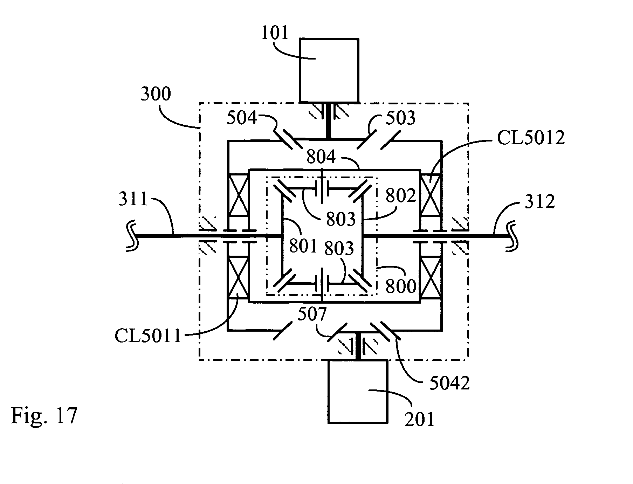

Fig. 17 is a structural schematic diagram showing the embodiment that the single electric machinery constitutes the second driving unit (201) for driving the input terminal of the second transmission (302), the umbrella-type planetary gear power transmission rocker arm (804) of the differential gear set (800) extends toward two sides, the basin-type bevel gear of the first transmission (504) and the first transmission input bevel gear (503), and the basin-type bevel gear of the second transmission (5042) and the second transmission input bevel gear (507) are installed, the two sets are in separation, the controllable clutch unit (CL5011) is installed between the basin-type bevel gear of the first transmission (504) and the umbrella-type planetary gear power transmission rocker arm (804), and the controllable clutch unit (CL5012) is installed between the basin-type bevel gear of the second transmission (5042) and the umbrella-type planetary gear power transmission rocker arm (804), according to the present invention.

### DESCRIPTION OF MAIN COMPONENT SYMBOLS

(CL101), (CL201), (CL500), (CL5011), (CL5012): Controllable clutch unit
(101): First driving unit
(201), (202): Second driving unit
(T201): Speed variable transmission
(300): Differential gear set assembly
(301): First transmission
(302): Second transmission
(311), (312): Differential output shaft
(400): Integrated dual basin-type bevel gear set with same outer diameter
(410): Integrated dual basin-type bevel gear set with different outer diameter
(420): Integrated transmission gear and basin-type bevel gear set
(430): Integrated transmission sprocket and basin-type bevel gear set
(440): Integrated transmission pulley and basin-type bevel gear set
(450): Integrated transmission CVT wheel and basin-type bevel gear set
(500): Combined dual basin-type bevel gear set with same outer diameter
(501): Separate basin-type bevel gear
(502): Combined transmission gear
(503): First transmission input bevel gear
(504): Basin-type bevel gear of the first transmission
(505): Second transmission input gear
(506): Transmission gear of the second transmission
(507): Second transmission input bevel gear
(510): Combined dual basin-type bevel gear set with different outer diameter
(520): Combined transmission gear and basin-type bevel gear set
(530): Combined transmission sprocket and basin-type bevel gear set
(540): Combined transmission pulley and basin-type bevel gear set
(550): Combined transmission CVT wheel and basin-type bevel gear set
(600): Dual basin-type bevel gear set with same outer diameter and clutch unit
(610): Dual basin-type bevel gear set with different outer diameter and clutch unit
(620): Transmission gear and basin-type bevel gear set with clutch unit
(630): Transmission sprocket and basin-type bevel gear set with clutch unit
(640): Transmission pulley and basin-type bevel gear set with clutch unit
(650): Transmission CVT wheel and basin-type bevel gear set with clutch unit
(800): Differential gear set
(801): Left umbrella-type differential output wheel
(802): Right umbrella-type differential output wheel
(803): Umbrella-type planetary gear set
(804): Umbrella-type planetary gear power transmission rocker arm
(5041), (5042): Basin-type bevel gear of the second transmission
(5061): Transmission sprocket of the second transmission
(5062): Transmission pulley of the second transmission
(5063): Transmission CVT wheel of the second transmission

### DETAILED DESCRIPTION OF THE PREFERRED EMBODIMENTS

Traditionally, for the hybrid drive system, in which the basin-type bevel gear of the differential gear set assembly drives the differential gear set, as shown in Fig. 1, the first transmission input bevel gear (503) at the input side of differential gear set assembly (300) usually couples with the basin-type bevel gear of the first transmission (504) to form the first transmission (301), so as to directly or through the controllable clutch unit (CL101) transmit the power from the first driving unit (101), such as engine, and by means of the rotary kinetic energy of the second driving unit (201), such as electric machinery, to drive the second transmission input bevel gear (507) served as the second transmission (302), thereby to common couple to the same basin-type bevel gear of the first transmission (504) with the first transmission input bevel gear (503) to transmit and rotate the kinetic energy, including that, the engine power and/or the electric machinery to implement the function of motor to drive the basin-type bevel gear of the first transmission (504), and the basin-type bevel gear of the first transmission (504) via the second transmission input bevel gear (507) integrated at the rotary part of the electric machinery to drive the electric machinery to operate the power generation function; and the shortcomings are that the second transmission input bevel gear (507) driven by the electric machinery of the second driving unit (201) and the first transmission input bevel gear (503) driven by the engine power of the first driving unit (101) drive the basin-type bevel gear of the first transmission (504) together, thus the speed ratio of the driving side of the electric machinery is limited to be the same with that of the input side of the engine, and the second transmission input bevel gear (507) must be the same with the coupled first transmission input bevel gear (503) driven by the engine rotary kinetic energy;

For the dual gear train driving structure at input side of basin-type gear of the present invention, the umbrella-type planetary gear power transmission rocker arm (804) for driving the differential gear set (800) in the differential gear set assembly (300) is made to be driven by two sets of transmissions, in which the first transmission (301) transmits the rotary kinetic energy between the umbrella-type planetary gear power transmission rocker arm (804) of the differential gear set (800) and the first driving unit (101), the second transmission (302) transmits the rotary kinetic energy between the umbrella-type planetary gear power transmission rocker arm (804) of the differential gear set (800) and the second driving unit (201), and one or both of the transmissions drives the umbrella-type planetary gear power transmission rocker arm (804) of the differential gear set (800) to transmit the rotary kinetic energy, and thereby drives the differential output shafts (311) and (312) to implement differential output operation.

For the dual gear train driving structure at input side of basin-type gear, the second driving unit (201) is used for the operations of the motor and/or the power generation function through powered electric machinery, or the fluid force rotary driving unit driven by hydraulic pressure or atmospheric pressure, or the rotary driving unit driven by flywheel, or spring, or human power, or animal power, or wind power, or water potential energy, or fluid power is used to be the second driving unit.

Fig. 2 is a structural schematic diagram showing the main components of the dual gear train driving structure at input side of basin-type gear.

As shown in Fig. 2, except for the first driving unit (101) and the second driving unit (201), the former is constituted by the rotary power source driven by internal combustion engine, or external combustion engine, or electric machinery, or hydraulic pressure, or atmospheric pressure, or spring, or flywheel, or human power, or animal power, or wind power, or water potential energy, or fluid power, and the later is constituted by the rotary power source driven by internal combustion engine, or external combustion engine, or electric machinery, or hydraulic pressure, or atmospheric pressure, or spring, or flywheel, or human power, or animal power, or wind power, or water potential energy, or fluid power, the main components including:
-- differential gear set assembly (300): constituted by gear, or friction wheel, or pulley, or sprocket, or CVT, in which the first transmission (301) is used to directly or through the controllable clutch unit (CL101) and/or transmission transmit the rotary kinetic energy between the first driving unit (101) and the umbrella-type planetary gear power transmission rocker arm (804) of the differential gear set (800), the second transmission (302) is used to transmit the rotary kinetic energy between the second driving unit (201) and the umbrella-type planetary gear power transmission rocker arm (804) of the differential gear set (800), and the differential gear set (800) is installed with the differential output shaft (311) and the differential output shaft (312) to coaxially output externally, and the case and the bearing of the differential gear set assembly are included;
-- controllable clutch unit (CL101): constituted by clutch unit or structure capable of performing the function of transmission engagement or disengagement, which is driven by human power, and/or electric power, and/or magnetic force, and/or machine power, and/or atmospheric pressure, and/or hydraulic pressure, and/or centrifugal force, and is equipped with the rotary input side and the rotary output side;
-- differential gear set (800): related to umbrella-type differential gear constituted by umbrella-type gear or umbrella-type friction wheel, in which the left umbrella-type differential output wheel (801) and the right umbrella-type differential output wheel (802) together couple to the umbrella-type planetary gear set (803), and the umbrella-type planetary gear set (803) is installed to the umbrella-type planetary gear power transmission rocker arm (804), and transmits the rotary kinetic energy between the differential gear set (800) and the first transmission (301) and/or the second transmission (302) through the umbrella-type planetary gear power transmission rocker arm (804);
-- first transmission (301): related to a transmission constituted by gear, or friction wheel, or pulley and transmission belt, or CVT wheel and transmission belt, or sprocket and transmission chain, including the structure of parallel input shaft and output shaft transmission, or non-parallel angle axis transmission, in which the input terminal of the first transmission is driven by the first driving unit (101), and the driving wheel of the first transmission drives the umbrella-type planetary gear power transmission rocker arm (804) of the differential gear set (800);
-- second transmission (302): related to a transmission constituted by gear, or friction wheel, or pulley and transmission belt, or CVT wheel and transmission belt, or sprocket and transmission chain, including the structure of parallel input shaft and output shaft transmission, or non-parallel angle axis transmission, in which the input terminal of the second transmission is driven by the second driving unit (202), and the driving wheel of the second transmission drives the umbrella-type planetary gear power transmission rocker arm (804) of the differential gear set (800); and
the above structures constituting the dual gear train driving structure at input side of basin-type gear, in which the differential output shaft (311) and the differential output shaft (312) of the differential gear set assembly (300) are driven by the first driving unit (101) and/or the second driving unit (201) to implement differential operation.

Fig. 3 is a structural schematic diagram showing that the rotary part of electric machinery constituting single set of the second driving unit (201) drives the transmission gear of the second transmission (506) through second transmission input gear (505), and along with the basin-type bevel gear of the first transmission (504) individually or together drive the umbrella-type planetary gear power transmission rocker arm (804).

As shown in Fig. 3, except for the rotary power source driven by the internal combustion engine constituting the first driving unit (101), and the rotary power source driven by the electric machinery constituting the second driving unit (201), the main components including:
-- differential gear set assembly (300): including the first transmission (301), constituted by the first transmission input bevel gear (503) and the basin-type bevel gear of the first transmission (504), which is used to directly or through the controllable clutch unit (CL101) and/or the transmission transmit the rotary kinetic energy between the first driving unit (101) and the umbrella-type planetary gear power transmission rocker arm (804) of the differential gear set (800), and including the second transmission (302), constituted by the second transmission input gear (505) and the transmission gear of the second transmission (506), which is used to transmit the rotary kinetic energy between the second driving unit (201) and the umbrella-type planetary gear power transmission rocker arm (804) of the differential gear set (800), and the differential gear set (800) is installed with the differential output shaft (311) and the differential output shaft (312) to coaxially output externally, and the case and the bearing of the differential gear set assembly are included;
-- controllable clutch unit (CL101): constituted by clutch unit or structure capable of implementing the function of transmission engagement or disengagement, which is driven by human power, and/or electric power, and/or magnetic force, and/or machine power, and/or atmospheric pressure, and/or hydraulic pressure, and/or centrifugal force, and is equipped with the rotary input side and the rotary output side;
-- differential gear set (800): related to umbrella-type differential gear constituted by umbrella-type gear or umbrella-type friction wheel, in which the left umbrella-type differential output wheel (801) and the right umbrella-type differential output wheel (802) together couple to the umbrella-type planetary gear set (803), and the umbrella-type planetary gear set (803) is installed to the umbrella-type planetary gear power transmission rocker arm (804), and transmits the rotary kinetic energy between the differential gear set (800) and the first transmission (301) and/or the second transmission (302) through the umbrella-type planetary gear power transmission rocker arm (804); and
the above structures constituting the dual gear train driving structure at input side of basin-type gear, in which the differential output shaft (311) and the differential output shaft (312) of the differential gear set assembly (300) are driven by the first driving unit (101) and/or the second driving unit (201) to implement differential operation.

Fig. 4 is a structural schematic diagram showing the embodiment that the clutch unit (CL201) is installed between the output terminal of the rotary part of the electric machinery constituting single set of the second driving unit (201) and the second transmission input gear (505) in Fig. 3.

As shown in Fig. 4, the controllable clutch unit (CL201) is installed between the output terminal of the rotary part of the electric machinery constituting single set of the second driving unit (201) and the second transmission input gear (505) in the embodiment of Fig. 3, to control the engaged or disengaged operation between the output terminal of the rotary part of the electric machinery and the second transmission input gear (505).

Fig. 5 is a structural schematic diagram showing the embodiment that two sets of the output terminals of the rotary part of the electric machinery constituting the second driving unit (201) in Fig. 3 is through the speed variable transmission (T201) and then through the controllable clutch unit (CL201) connected to the second transmission input gear (505) in Fig. 3.

As shown in Fig. 5, two sets of the output terminals of the rotary part of the electric machinery constituting the second driving unit (201) in the embodiment of Fig. 3 is through the speed variable transmission (T201) and then through the controllable clutch unit (CL201) connected to the second transmission input gear (505), and by means of the speed variable transmission (T201) to change the speed ratio between the output terminal of the rotary part of the electric machinery and the input terminal of the controllable clutch unit (CL201), and by means of the controllable clutch unit (CL201) to control the engaged or disengaged operation between the output terminal of the speed variable transmission (T201) and the second transmission input gear (505).

Fig. 6 is a structural schematic diagram showing the embodiment that two electric machineries constituting the second driving units (201) and (202) are further installed to the embodiment of Fig. 3 for commonly driving the input terminal of the second transmission (302), according to the present invention.

As shown in Fig. 6, two electric machineries are further installed to the embodiment of Fig. 3, thus the rotary power sources driven by the two electric machineries constitute the second driving units (201) and (202), thereby by means of two or one of the electric machineries to drive the second transmission input gear (505).

Fig. 7 is a structural schematic diagram showing the embodiment that two electric machineries constituting the second driving units (201) and (202) are further installed to the embodiment of Fig. 4, and the two controllable clutch units (CL201) and (CL202) are individually installed between each of the output terminals of the rotary parts of the two electric machineries and the second transmission input gear (505).

As shown in Fig. 7, two electric machineries are further installed to the embodiment of Fig. 4, thus the rotary power sources driven by the two electric machineries constitute the second driving units (201) and (202), and the two controllable clutch units (CL201) and (CL202) are individually installed between each of the output terminals of the rotary parts of the two electric machineries and the second transmission input gear (505), thereby by means of two or one of the electric machineries to drive the second transmission input gear (505).

Fig. 8 is a structural schematic diagram showing the embodiment that two electric machineries constituting the second driving units (201) and (202) are further installed to the embodiment of Fig. 7, and the two speed variable transmissions (T201) and (T202) are individually installed between each of the output terminals of the rotary parts of the two electric machineries and the second transmission input gear (505).

As shown in Fig. 8, two electric machineries are further installed to the embodiment of Fig. 7, thus the rotary power sources driven by the two electric machineries constitute the second driving units (201) and (202), and the two speed variable transmissions (T201) and (T202) are individually installed between each of the output terminals of the rotary parts of the two electric machineries and the second transmission input gear (505), thereby by means of two or one of the electric machineries to drive the second transmission input gear (505).

Fig. 9 is a structural schematic diagram showing the embodiment that two electric machineries constituting the second driving units (201) and (202) are further installed to the embodiment of Fig. 7, and the output terminals of the rotary parts of the two electric machineries are individually through the controllable clutch units (CL201) and (CL202) and then through the speed variable transmissions (T201) and (T202) connected to the second transmission input gear (505).

As shown in Fig. 9, two electric machineries are further installed to the embodiment of Fig. 7, thus the rotary power sources driven by the two electric machineries constitute the second driving units (201) and (202), and the output terminals of the rotary parts of the two electric machineries are individually through the controllable clutch units (CL201) and (CL202) and then through the speed variable transmissions (T201) and (T202) connected to the second transmission input gear (505), thereby by means of two or one of the electric machineries to drive the second transmission input gear (505).

Fig. 10 is a structural schematic diagram showing the embodiment that two electric machineries constituting the second driving units (201) and (202) are further installed in the embodiment of Fig. 7, and the output terminals of the rotary parts of the two electric machineries are individually through the speed variable transmissions (T201) and (T202) and then through the controllable clutch units (CL201) and (CL202) connected to the second transmission input gear (505).

As shown in Fig. 10, two electric machineries are further installed to the embodiment of Fig. 7, thus the rotary power sources driven by the two electric machineries constitute the second driving units (201) and (202), and the output terminals of the rotary parts of the two electric machineries are individually through the speed variable transmissions (T201) and (T202) and then through the controllable clutch units (CL201) and (CL202) connected to the second transmission input gear (505), thereby by means of two or one of the electric machineries to drive the second transmission input gear (505).

As for the above embodiments in Fig. 3 to Fig. 10, the umbrella-type planetary gear set (803) and the umbrella-type planetary gear power transmission rocker arm (804) constitute the first transmission (301), and the second transmission input gear (505) and the transmission gear of the second transmission (506) constitute the second transmission (302), but for the dual gear train driving structure at input side of basin-type gear, the constitutions of the first transmission (301) and the second transmission (302) do not limit to the above-mentioned, which have following choices as application requirements.

The following are embodiments of the dual gear train driving structure at input side of basin-type gear of the present invention, in which the controllable clutch unit (CL500) is installed within the differential gear set assembly (300).

Fig. 11 is a structural schematic diagram showing the embodiment that the output terminal of the rotary part of electric machinery constituting the single set of the second driving unit (201) couples with the basin-type bevel gear of the first transmission (504) through the second transmission (302) and the controllable clutch unit (CL500), and then connects with the umbrella-type planetary gear power transmission rocker arm (804), according to the present invention.

As shown in Fig. 11, except for the rotary power source driven by the internal combustion engine constituting the first driving unit (101), and the rotary power source driven by the electric machinery constituting the second driving unit (201), the main components including:
-- differential gear set assembly (300): the controllable clutch unit (CL500) is installed between the driving wheel group of the first transmission and the driving wheel group of the second transmission for controlling the engaged or disengaged operation; in which the first transmission input bevel gear (503) and the basin-type bevel gear of the first transmission (504) constitutes the first transmission (301), and the first driving unit (101) directly or through the controllable clutch unit (CL101) and/or through the speed variable transmission drives the first transmission input bevel gear (503), then the first transmission input bevel gear (503) drives the basin-type bevel gear of the first transmission (504), and further drives the umbrella-type planetary gear power transmission rocker arm (804); and/or the rotary kinetic energy of the second driving unit (201) drives the umbrella-type planetary gear power transmission rocker arm (804) of the differential gear set (800) through the second transmission (302) and the controllable clutch unit (CL500); and the differential gear set (800) is installed with the differential output shaft (311) and the differential output shaft (312) to coaxially output externally, and the case and the bearing of differential gear set assembly are included;
-- controllable clutch units (CL101), (CL500): constituted by clutch unit or structure capable of performing the function of transmission engagement or disengagement, which is driven by human power, and/or electric power, and/or magnetic force, and/or machine power, and/or atmospheric pressure, and/or hydraulic pressure, and/or centrifugal force, and is equipped with the rotary input side and the rotary output side;
-- differential gear set (800): related to the umbrella-type differential gear constituted by the umbrella-type gear or the umbrella-type friction wheel, in which the left umbrella-type differential output wheel (801) and the right umbrella-type differential output wheel (802) together couple to the umbrella-type planetary gear set (803), and the umbrella-type planetary gear set (803) is installed to the umbrella-type planetary gear power transmission rocker arm (804), and transmits the rotary kinetic energy between the differential gear set (800) and the first transmission (301) and/or the second transmission (302) through the umbrella-type planetary gear power transmission rocker arm (804); and
the above structures constituting the dual gear train driving structure at input side of basin-type gear, in which the differential output shaft (311) and the differential output shaft (312) of the differential gear set assembly (300) are driven by the first driving unit (101) and/or the second driving unit (201) to implement differential operation.

For the dual gear train driving structure at input side of basin-type gear, the umbrella-type planetary gear power transmission rocker arm (804) is further installed at both sides of the differential gear set (800), in which one side of the umbrella-type planetary gear power transmission rocker arm (804) combines with the basin-type bevel gear of the first transmission (504), and the other side couples with the second transmission (302) through the controllable clutch unit (CL500), so as to control the engaged transmission or disengagement between the second transmission (302) and the differential gear set (800).

The followings are various embodiments of the present invention that the umbrella-type planetary gear power transmission rocker arm (804) is installed at two sides of the differential gear set (800), in which one side of the umbrella-type planetary gear power transmission rocker arm (804) combines with the basin-type bevel gear of the first transmission (504), and the other side couples with the second transmission (302) through the controllable clutch unit (CL500).

Fig. 12 is a structural schematic diagram showing the embodiment that the second transmission (302) driven by the output terminal of the rotary part of the electric machinery constituting the single set of the second driving unit (201) combines with the umbrella-type planetary gear power transmission rocker arm (804) at left side of the differential gear set (800) through the controllable clutch unit (CL500), while the umbrella-type planetary gear power transmission rocker arm (804) at right side rightward extends and combines with the basin-type bevel gear of the first transmission (504), and is subject to be driven by the first driving unit (101) through the first transmission input bevel gear (503), according to the present invention.

As shown in Fig. 12, except for the rotary power source driven by the internal combustion engine constituting the first driving unit (101), and the rotary power source driven by the electric machinery constituting the second driving unit (201), the main components including:
-- differential gear set assembly (300): the controllable clutch unit (CL500) is installed between the driving wheel group of the second transmission (302) and the umbrella-type planetary gear power transmission rocker arm (804) for controlling the engaged or disengaged operation; in which the first transmission input bevel gear (503) and the basin-type bevel gear of the first transmission (504) constitutes the first transmission (301), and the first driving unit (101) directly or through the controllable clutch unit (CL101) and/or through the speed variable transmission drives the first transmission input bevel gear (503), then the first transmission input bevel gear (503) drives the basin-type bevel gear of the first transmission (504), and further drives the umbrella-type planetary gear power transmission rocker arm (804); and/or the rotary kinetic energy of the second driving unit (201) drives the umbrella-type planetary gear power transmission rocker arm (804) of the differential gear set (800) through the second transmission (302) and the controllable clutch unit (CL500); and the differential gear set (800) is installed with the differential output shaft (311) and the differential output shaft (312) to coaxially output externally, and is equipped with the case and the bearing of differential gear set assembly;
-- controllable clutch units (CL101), (CL500): constituted by clutch unit or structure capable of performing the function of transmission engagement or disengagement, which is driven by human power, and/or electric power, and/or magnetic force, and/or machine power, and/or atmospheric pressure, and/or hydraulic pressure, and/or centrifugal force, and is equipped with the rotary input side and the rotary output side;
-- differential gear set (800): related to the umbrella-type differential gear constituted by the umbrella-type gear or the umbrella-type friction wheel, in which the left umbrella-type differential output wheel (801) and the right umbrella-type differential output wheel (802) together couple to the umbrella-type planetary gear set (803), and the umbrella-type planetary gear set (803) is installed to the umbrella-type planetary gear power transmission rocker arm (804), and transmits the rotary kinetic energy between the differential gear set (800) and the first transmission (301) through the umbrella-type planetary gear power transmission rocker arm (804), and/or transmits the rotary kinetic energy between the second transmission (302) and the umbrella-type planetary gear power transmission rocker arm (804) through the controllable clutch unit (CL500) ; and
the above structures constituting the dual gear train driving structure at input side of basin-type gear, in which the differential output shaft (311) and the differential output shaft (312) of the differential gear set assembly (300) are driven by the first driving unit (101) and/or the second driving unit (201) to implement differential operation;

For the dual gear train driving structure at input side of basin-type gear, the controllable clutch unit (CL5011) is further installed between the umbrella-type planetary gear power transmission rocker arm (804) and the driving wheel group of the first transmission, and the controllable clutch unit (CL5012) is further installed between the umbrella-type planetary gear power transmission rocker arm (804) and the driving wheel group of the second transmission (302), so as to control engaged or disengaged operation in various permutations and combinations between the controllable clutch unit (CL5011) and the controllable clutch unit (CL5012) on the basis of operational function;

Fig. 13 is a structural schematic diagram showing the embodiment that the controllable clutch unit (CL5011) is installed between the umbrella-type planetary gear power transmission rocker arm (804) and the driving wheel group of the first transmission (301), and the controllable clutch unit (CL5012) is installed between the umbrella-type planetary gear power transmission rocker arm (804) and the driving wheel group of the second transmission (302), according to the present invention.

As shown in Fig. 13, except for the rotary power source driven by the internal combustion engine constituting the first driving unit (101), and the rotary power source driven by the electric machinery constituting the second driving unit (201), the main components including:
-- differential gear set assembly (300): equipped with the controllable clutch units (CL5011) and (CL5012), in which the controllable clutch unit (CL5011) is installed between the umbrella-type planetary gear power transmission rocker arm (804) and the driving wheel group of the first transmission, and the controllable clutch unit (CL5012) is installed between the umbrella-type planetary gear power transmission rocker arm (804) and the driving wheel group of the second transmission (302), so as to control engaged or disengaged operation in various permutations and combinations between the controllable clutch unit (CL5011) and the controllable clutch unit (CL5012) on the basis of operational function, including that the first transmission (301) is constituted by the first transmission input bevel gear (503) and the basin-type bevel gear of the first transmission (504), and the first driving unit (101) directly or through the controllable clutch unit (CL101) and/or through the speed variable transmission drives the first transmission input bevel gear (503), then the first transmission input bevel gear (503) drives the basin-type bevel gear of the first transmission (504), and further drives the umbrella-type planetary gear power transmission rocker arm (804) through the controllable clutch unit (CL5011); and/or the rotary kinetic energy of the second driving unit (201) drives the umbrella-type planetary gear power transmission rocker arm (804) of the differential gear set (800) through the second transmission (302) and the controllable clutch unit (CL5012); and the differential gear set (800) is installed with the differential output shaft (311) and the differential output shaft (312) to coaxially output externally, and is equipped with the case and the bearing of differential gear set assembly;
-- controllable clutch units (CL5011), (CL5012): constituted by clutch unit or structure capable of performing the function of transmission engagement or disengagement, which is driven by human power, and/or electric power, and/or magnetic force, and/or machine power, and/or atmospheric pressure, and/or hydraulic pressure, and/or centrifugal force, and is equipped with the rotary input side and the rotary output side;
-- differential gear set (800): related to the umbrella-type differential gear constituted by the umbrella-type gear or the umbrella-type friction wheel, in which the left umbrella-type differential output wheel (801) and the right umbrella-type differential output wheel (802) together couple to the umbrella-type planetary gear set (803), and the umbrella-type planetary gear set (803) is installed to the umbrella-type planetary gear power transmission rocker arm (804), and transmits the rotary kinetic energy between the umbrella-type planetary gear power transmission rocker arm (804) and the first transmission (301) through the controllable clutch unit (CL5011), and/or transmits the rotary kinetic energy between the umbrella-type planetary gear power transmission rocker arm (804) and the second transmission (302) through the controllable clutch unit (CL5012); and
the above structures constituting the dual gear train driving structure at input side of basin-type gear, in which the differential output shaft (311) and the differential output shaft (312) of the differential gear set assembly (300) are driven by the first driving unit (101) and/or the second driving unit (201) to implement differential operation.

Fig. 14 is a structural schematic diagram showing the embodiment that the second driving unit (201) constituted by the single electric machinery drives the input terminal of the second transmission (302), and the umbrella-type planetary gear power transmission rocker arm (804) is installed at two sides of the differential gear set (800), in which the controllable clutch unit (CL5011) is installed between one side of the umbrella-type planetary gear power transmission rocker arm (804) and the basin-type bevel gear of the first transmission (504), while the controllable clutch unit (CL5012) is installed between the other side of the umbrella-type planetary gear power transmission rocker arm (804) and the second transmission (302), according to the present invention.

As shown in Fig. 14, except for the rotary power source driven by the internal combustion engine constituting the first driving unit (101), and the rotary power source driven by the electric machinery constituting the second driving unit (201), the main components including:
-- differential gear set assembly (300): equipped with the controllable clutch units (CL5011) and (CL5012), in which the umbrella-type planetary gear power transmission rocker arm (804) is installed at two sides of the differential gear set (800), in which the controllable clutch unit (CL5011) is installed between one side of the umbrella-type planetary gear power transmission rocker arm (804) and the basin-type bevel gear of the first transmission (504), while the controllable clutch unit (CL5012) is installed between the other side of the umbrella-type planetary gear power transmission rocker arm (804) and the driving wheel of the second transmission (302), so as to control engaged or disengaged operation in various permutations and combinations between the controllable clutch unit (CL5011) and the controllable clutch unit (CL5012) on the basis of operational function, including that the first transmission (301) is constituted by the first transmission input bevel gear (503) and the basin-type bevel gear of the first transmission (504), and the first driving unit (101) directly or through the controllable clutch unit (CL101) and/or through the speed variable transmission drives the first transmission input bevel gear (503), then the first transmission input bevel gear (503) drives the basin-type bevel gear of the first transmission (504), and further drives the umbrella-type planetary gear power transmission rocker arm (804) through the controllable clutch unit (CL5011); and/or the rotary kinetic energy of the second driving unit (201) drives the umbrella-type planetary gear power transmission rocker arm (804) through the second transmission (302) and the controllable clutch unit (CL5012); and the differential gear set (800) is installed with the differential output shaft (311) and the differential output shaft (312) to coaxially output externally, and is equipped with the case and the bearing of differential gear set assembly;
-- controllable clutch units (CL5011), (CL5012): constituted by clutch unit or structure capable of performing the function of transmission engagement or disengagement, which is driven by human power, and/or electric power, and/or magnetic force, and/or machine power, and/or atmospheric pressure, and/or hydraulic pressure, and/or centrifugal force, and is equipped with the rotary input side and the rotary output side; and
-- differential gear set (800): related to the umbrella-type differential gear constituted by the umbrella-type gear or the umbrella-type friction wheel, in which the left umbrella-type differential output wheel (801) and the right umbrella-type differential output wheel (802) together couple to the umbrella-type planetary gear set (803), and the umbrella-type planetary gear set (803) is installed to the umbrella-type planetary gear power transmission rocker arm (804), and transmits the rotary kinetic energy between the umbrella-type planetary gear power transmission rocker arm (804) and the first transmission (301) through the controllable clutch unit (CL5011), and/or transmits the rotary kinetic energy between the umbrella-type planetary gear power transmission rocker arm (804) and the second transmission (302) through the controllable clutch unit (CL5012);

For the dual gear train driving structure at input side of basin-type gear, the umbrella-type planetary gear power transmission rocker arm (804) of the differential gear set (800) further extends toward two sides, and the basin-type bevel gear of the first transmission (504) and the first transmission input bevel gear (503), and the basin-type bevel gear of the second transmission (5042) and the second transmission input bevel gear (507) are installed, the two sets are in separation, wherein the first transmission input bevel gear (503) is driven by the first driving unit (101), then is through the basin-type bevel gear of the first transmission (504) to drive one side of the umbrella-type planetary gear power transmission rocker arm (804), while the second transmission input bevel gear (507) is driven by the second driving unit (201), then is through the basin-type bevel gear of the second transmission (5042) to drive the other side of the umbrella-type planetary gear power transmission rocker arm (804), whereas the umbrella-type planetary gear power transmission rocker arm (804) transmits the rotary kinetic energy to the differential gear set (800);

Fig. 15 is a structural schematic diagram showing the embodiment that single electric machinery constitutes the second driving unit (201) for driving the second transmission input bevel gear (507) at the input terminal of the second transmission (302), the umbrella-type planetary gear power transmission rocker arm (804) of the differential gear set (800) extends toward two sides, the basin-type bevel gear of the first transmission (504) and the first transmission input bevel gear (503), and the basin-type bevel gear of the second transmission (5042) and the second transmission input bevel gear (507) are installed, and the two sets are in separation, according to the present invention.

As shown in Fig. 15, except for the second transmission input bevel gear (507) at the input terminal of the second transmission (302), which is driven by the second driving unit (201) constituted by the single electric machinery, the main components including:
-- differential gear set assembly (300): the umbrella-type planetary gear power transmission rocker arm (804) of the differential gear set (800) extends toward two sides, the basin-type bevel gear of the first transmission (504) and the first transmission input bevel gear (503), and the basin-type bevel gear of the second transmission (5042) and the second transmission input bevel gear (507) are installed, and the two sets are in separation, wherein the first transmission input bevel gear (503) is directly or through the controllable clutch unit (CL101) driven by the first driving unit (101), then is through the basin-type bevel gear of the first transmission (504) to drive one side of the umbrella-type planetary gear power transmission rocker arm (804), while the second transmission input bevel gear (507) is driven by the second driving unit (201), then is through the basin-type bevel gear of the second transmission (5042) to drive the other side of the umbrella-type planetary gear power transmission rocker arm (804);
-- controllable clutch unit (CL101): constituted by clutch unit or structure capable of performing the function of transmission engagement or disengagement, which is driven by human power, and/or electric power, and/or magnetic force, and/or machine power, and/or atmospheric pressure, and/or hydraulic pressure, and/or centrifugal force, and is equipped with the rotary input side and the rotary output side;
-- differential gear set (800): related to the umbrella-type differential gear constituted by the umbrella-type gear or the umbrella-type friction wheel, in which the left umbrella-type differential output wheel (801) and the right umbrella-type differential output wheel (802) together couple to the umbrella-type planetary gear set (803), and the umbrella-type planetary gear set (803) is installed to the umbrella-type planetary gear power transmission rocker arm (804), and transmits the rotary kinetic energy between the differential gear set (800) and the first transmission (301) and/or the second transmission (302) through the umbrella-type planetary gear power transmission rocker arm (804); and
the above structures constituting the dual gear train driving structure at input side of basin-type gear, in which the differential output shaft (311) and the differential output shaft (312) of the differential gear set assembly (300) are driven by the first driving unit (101) and/or the second driving unit (201) to implement differential operation.

Fig. 16 is a structural schematic diagram showing the embodiment that the single electric machinery constitutes the second driving unit (201) for driving the second transmission input bevel gear (507) at the input terminal of the second transmission (302), the umbrella-type planetary gear power transmission rocker arm (804) of the differential gear set (800) extends toward two sides, the basin-type bevel gear of the first transmission (504) and the first transmission input bevel gear (503), and the basin-type bevel gear of the second transmission (5042) and the second transmission input bevel gear (507) are installed, the two sets are in separation, and the controllable clutch unit (CL500) is installed between the basin-type bevel gear of the second transmission (5042) and the umbrella-type planetary gear power transmission rocker arm (804), according to the present invention.

As shown in Fig. 16, except for the second driving unit (201) constituted by single electric machinery for driving the input terminal of the second transmission (302), the main components including:
-- differential gear set assembly (300): it is arranged that the umbrella-type planetary gear power transmission rocker arm (804) of the differential gear set (800) extends toward two sides, the basin-type bevel gear of the first transmission (504) and the first transmission input bevel gear (503), and the basin-type bevel gear of the second transmission (5042) and the second transmission input bevel gear (507) are installed, and the two sets are in separation, and the controllable clutch unit (CL500) is installed between the basin-type bevel gear of the second transmission (5042) and the umbrella-type planetary gear power transmission rocker arm (804), wherein the first transmission input bevel gear (503) is driven by the first driving unit (101), then is through the basin-type bevel gear of the first transmission (504) to drive one side of the umbrella-type planetary gear power transmission rocker arm (804), while the second transmission input bevel gear (507) is driven by the second driving unit (201), then is through the basin-type bevel gear of the second transmission (5042) to drive the controllable clutch unit (CL500), and to further drive the other side of the umbrella-type planetary gear power transmission rocker arm (804);
-- controllable clutch units (CL101), (CL500): constituted by the clutch unit or structure capable of performing the function of transmission engagement or disengagement, which is driven by human power, and/or electric power, and/or magnetic force, and/or machine power, and/or atmospheric pressure, and/or hydraulic pressure, and/or centrifugal force, and is equipped with the rotary input side and the rotary output side;
-- differential gear set (800): related to the umbrella-type differential gear constituted by the umbrella-type gear or the umbrella-type friction wheel, in which the left umbrella-type differential output wheel (801) and the right umbrella-type differential output wheel (802) together couple to the umbrella-type planetary gear set (803), and the umbrella-type planetary gear set (803) is installed to the umbrella-type planetary gear power transmission rocker arm (804), and transmits the rotary kinetic energy between the differential gear set (800) and the first transmission (301) through the umbrella-type planetary gear power transmission rocker arm (804), and/or transmits the rotary kinetic energy between the differential gear set (800) and the second transmission (302) through the controllable clutch unit (CL500); and
the above structures constituting the dual gear train driving structure at input side of basin-type gear, in which the differential output shaft (311) and the differential output shaft (312) of the differential gear set assembly (300) are driven by the first driving unit (101) and/or the second driving unit (201) to implement differential operation.

Fig. 17 is a structural schematic diagram showing the embodiment that the single electric machinery constitutes the second driving unit (201) for driving the input terminal of the second transmission (302), the umbrella-type planetary gear power transmission rocker arm (804) of the differential gear set (800) extends toward two sides, the basin-type bevel gear of the first transmission (504) and the first transmission input bevel gear (503), and the basin-type bevel gear of the second transmission (5042) and the second transmission input bevel gear (507) are installed, the two sets are in separation, the controllable clutch unit (CL5011) is installed between the basin-type bevel gear of the first transmission (504) and the umbrella-type planetary gear power transmission rocker arm (804), and the controllable clutch unit (CL5012) is installed between the basin-type bevel gear of the second transmission (5042) and the umbrella-type planetary gear power transmission rocker arm (804), according to the present invention.

As shown in Fig. 17, except for the second driving unit (201) constituted by single electric machinery for driving the input terminal of the second transmission (302), the main components including:
-- differential gear set assembly (300): it is arranged that the umbrella-type planetary gear power transmission rocker arm (804) of the differential gear set (800) extends toward two sides, the basin-type bevel gear of the first transmission (504) and the first transmission input bevel gear (503), and the basin-type bevel gear of the second transmission (5042) and the second transmission input bevel gear (507) are installed, and the two sets are in separation, the controllable clutch unit (CL5011) is installed between the basin-type bevel gear of the first transmission (504) and the umbrella-type planetary gear power transmission rocker arm (804), while the controllable clutch unit (CL5012) is installed between the basin-type bevel gear of the second transmission (5042) and the umbrella-type planetary gear power transmission rocker arm (804), wherein the first transmission input bevel gear (503) is driven by the first driving unit (101), then is through the basin-type bevel gear of the first transmission (504) to drive the controllable clutch unit (CL5011), and further drives one side of the umbrella-type planetary gear power transmission rocker arm (804), whereas, the second transmission input bevel gear (507) is driven by the second driving unit (201), then is through the basin-type bevel gear of the second transmission (5042) to drive the controllable clutch unit (CL5012), and to further drive the other side of the umbrella-type planetary gear power transmission rocker arm (804);
-- controllable clutch units (CL5011), (CL5012): constituted by the clutch unit or structure capable of performing the function of transmission engagement or disengagement, which is driven by human power, and/or electric power, and/or magnetic force, and/or machine power, and/or atmospheric pressure, and/or hydraulic pressure, and/or centrifugal force, and is equipped with the rotary input side and the rotary output side;
-- differential gear set (800): related to the umbrella-type differential gear constituted by the umbrella-type gear or the umbrella-type friction wheel, in which the left umbrella-type differential output wheel (801) and the right umbrella-type differential output wheel (802) together couple to the umbrella-type planetary gear set (803), and the umbrella-type planetary gear set (803) is installed to the umbrella-type planetary gear power transmission rocker arm (804), and transmits the rotary kinetic energy between the umbrella-type planetary gear power transmission rocker arm (804) and the first transmission (301) through the controllable clutch unit (CL5011), and/or transmits the rotary kinetic energy between the umbrella-type planetary gear power transmission rocker arm (804) and the second transmission (302) through the controllable clutch unit (CL5012).

## Claims

1. A dual drive gear train driving structure , wherein a differential gear set input rocker arm (804) driven by the basin-type bevel gear (504) in a differential gear set assembly (300) is made to be driven by two sets of transmissions (301, 302), in which a first transmission (301) transmits rotary kinetic energy between the differential gear set input rocker arm (804) and an engine (101), and a second transmission (302) transmits rotary kinetic energy between the differential gear set input rocker arm (804) and a second driving unit (201), and one or both of the transmissions (301, 302) drives the differential gear set input rocker arm (804),the dual drive gear train driving structure comprising:
differential gear set assembly (300): including the first transmission (301), constituted by the first transmission input bevel gear (503) and the basin-type bevel gear of the first transmission (504), which is used through the controllable clutch unit (CL101) and/or the transmission transmit the rotary kinetic energy between the first driving unit (101) and the umbrella-type planetary gear power transmission rocker arm (804) of the differential gear set (800), and including the second transmission (302), constituted by the second transmission input gear (505) and the transmission gear of the second transmission (506), which is used to transmit the rotary kinetic energy between the second driving unit (201) and the umbrella-type planetary gear power transmission rocker arm (804) of the differential gear set (800), and the differential gear set (800) is installed with the differential output shaft (311) and the differential output shaft (312) to coaxially output externally, and the case and the bearing of the differential gear set assembly are included;
-- controllable clutch unit (CL101): constituted by clutch unit or structure capable of performing the function of transmission engagement or disengagement, which is driven by human power, and/or electric power, and/or magnetic force, and/or machine power, and/or atmospheric pressure, and/or hydraulic pressure, and/or centrifugal force, and is equipped with the rotary input side and the rotary output side, situated between the first driving unit and the input bevel gear (503) of the first transmission (301);
-- differential gear set (800): related to umbrella-type differential gear constituted by umbrella-type gear or umbrella-type friction wheel, in which the left umbrella-type differential output wheel (801) and the right umbrella-type differential output wheel (802) together couple to the umbrella-type planetary gear set (803), and the umbrella-type planetary gear set (803) is installed to the umbrella-type planetary gear power transmission rocker arm (804), and transmits the rotary kinetic energy between the differential gear set (800) and the first transmission (301) and/or the second transmission (302) through the umbrella-type planetary gear power transmission rocker arm (804); and
controllable clutch unit (CL201), further installed between the output terminal of the rotary part of the electric machinery constituting single set of the second driving unit (201) and the second transmission input gear (505), to control the engaged or disengaged operation between the output terminal of the rotary part of the electric machinery and the second transmission input gear (505);
the above structures constituting the dual gear train driving structure at input side of basin-type gear, in which the differential output shaft (311) and the differential output shaft (312) of the differential gear set assembly (300) are driven by the first driving unit (101) and/or the second driving unit (201) to implement differential operation.

2. The dual drive gear train driving structure as claimed in Claim 1, in which two sets of the output terminals of the rotary part of the electric machinery constituting the second driving unit (201) is further through the speed variable transmission (T201) and then through the controllable clutch unit (CL201) connected to the second transmission input gear (505), and by means of the speed variable transmission (T201) to change the speed ratio between the output terminal of the rotary part of the electric machinery and the input terminal of the controllable clutch unit (CL201), and by means of the controllable clutch unit (CL201) to control the engaged or disengaged operation between the output terminal of the speed variable transmission (T201) and the second transmission input gear (505).

3. The dual drive gear train driving structure as claimed in Claim 1, in which two electric machineries are further installed, thus the rotary power sources driven by the two electric machineries constitute the second driving units (201) and (202), and the two controllable clutch units (CL201) and (CL202) are individually installed between each of the output terminals of the rotary parts of the two electric machineries and the second transmission input gear (505), thereby by means of two or one of the electric machineries to drive the second transmission input gear (505).

4. The dual drive gear train driving structure as claimed in Claim 3, wherein the output terminals of the rotary parts of the two electric machineries are individually through the controllable clutch units (CL201) and (CL202) and then through the speed variable transmissions (T201) and (T202) connected to the second transmission input gear (505), thereby by means of two or one of the electric machineries to drive the second transmission input gear (505).

5. The dual gear train driving structure as claimed in Claim 3, wherein the output terminals of the rotary parts of the two electric machineries are individually through the speed variable transmissions (T201) and (T202) and then through the controllable clutch units (CL201) and (CL202) connected to the second transmission input gear (505), thereby by means of two or one of the electric machineries to drive the second transmission input gear (505).

6. A dual drive gear train driving structure , wherein a differential gear set input rocker arm (804) driven by the basin-type bevel gear (504) in a differential gear set assembly (300) is made to be driven by two sets of transmissions (301, 302), in which a first transmission (301) transmits rotary kinetic energy between the differential gear set input rocker arm (804) and an engine (101), and a second transmission (302) transmits rotary kinetic energy between the differential gear set input rocker arm (804) and a second driving unit (201), and one or both of the transmissions (301, 302) drives the differential gear set input rocker arm (804), wherein the output terminal of the rotary part of electric machinery constituting the single set of the second driving unit (201) drives the umbrella-type planetary gear power transmission rocker arm (804) through the second transmission (302) and the controllable clutch unit (CL500, CL5012), the main components including:
-- differential gear set assembly (300): the controllable clutch unit (CL500, CL5012) is installed between the driving wheel group of the first transmission and the driving wheel group of the second transmission for controlling the engaged or disengaged operation; in which the first transmission input bevel gear (503) and the basin-type bevel gear of the first transmission (504) constitutes the first transmission (301), and the first driving unit (101) drives the first transmission input bevel gear (503), then the first transmission input bevel gear (503) drives the basin-type bevel gear of the first transmission (504), and further drives the umbrella-type planetary gear power transmission rocker arm (804); and/or the rotary kinetic energy of the second driving unit (201) drives the umbrella-type planetary gear power transmission rocker arm (804) of the differential gear set (800) through the second transmission (302) and the controllable clutch unit (CL500, CL5012); and the differential gear set (800) is installed with the differential output shaft (311) and the differential output shaft (312) to coaxially output externally, and the case and the bearing of differential gear set assembly are included;
-- controllable clutch units (CL101), (CL500, CL5012): constituted by clutch unit or structure capable of performing the function of transmission engagement or disengagement, which is driven by human power, and/or electric power, and/or magnetic force, and/or machine power, and/or atmospheric pressure, and/or hydraulic pressure, and/or centrifugal force, and is equipped with the rotary input side and the rotary output side;
-- differential gear set (800): related to the umbrella-type differential gear constituted by the umbrella-type gear or the umbrella-type friction wheel, in which the left umbrella-type differential output wheel (801) and the right umbrella-type differential output wheel (802) together couple to the umbrella-type planetary gear set (803), and the umbrella-type planetary gear set (803) is installed to the umbrella-type planetary gear power transmission rocker arm (804), and transmits the rotary kinetic energy between the differential gear set (800) and the first transmission (301) and/or the second transmission (302) through the umbrella-type planetary gear power transmission rocker arm (804); and
the above structures constituting the dual gear train driving structure at input side of basin-type gear, in which the differential output shaft (311) and the differential output shaft (312) of the differential gear set assembly (300) are driven by the first driving unit (101) and/or the second driving unit (201) to implement differential operation.

7. The dual drive gear train driving structure of claim 6, further comprising a controllable clutch unit, installed between the first driving unit and the input bevel gear (503) of the first transmission.

8. The dual drive gear train driving structure as claimed in Claim 1, wherein the umbrella-type planetary gear power transmission rocker arm (804) is further installed at both sides of the differential gear set (800), in which one side of the umbrella-type planetary gear power transmission rocker arm (804) combines with the basin-type bevel gear of the first transmission (504), and the other side couples with the second transmission (302) through a controllable clutch unit (CL500, CL5012), so as to control the engaged transmission or disengagement between the second transmission (302) and the differential gear set (800), the main components including:
-- differential gear set assembly (300): the controllable clutch unit (CL500, CL5012) is installed between the driving wheel group of the second transmission (302) and the umbrella-type planetary gear power transmission rocker arm (804) for controlling the engaged or disengaged operation; in which the first transmission input bevel gear (503) and the basin-type bevel gear of the first transmission (504) constitutes the first transmission (301), and the first driving unit (101) through the controllable clutch unit (CL101) drives the first transmission input bevel gear (503), then the first transmission input bevel gear (503) drives the basin-type bevel gear of the first transmission (504), and further drives the umbrella-type planetary gear power transmission rocker arm (804); and/or the rotary kinetic energy of the second driving unit (201) drives the umbrella-type planetary gear power transmission rocker arm (804) of the differential gear set (800) through the second transmission (302) and the controllable clutch unit (CL500, CL5012); and the differential gear set (800) is installed with the differential output shaft (311) and the differential output shaft (312) to coaxially output externally, and is equipped with the case and the bearing of differential gear set assembly;
-- controllable clutch units (CL101), (CL500, CL5012): constituted by clutch unit or structure capable of performing the function of transmission engagement or disengagement, which is driven by human power, and/or electric power, and/or magnetic force, and/or machine power, and/or atmospheric pressure, and/or hydraulic pressure, and/or centrifugal force, and is equipped with the rotary input side and the rotary output side;
-- differential gear set (800): related to the umbrella-type differential gear constituted by the umbrella-type gear or the umbrella-type friction wheel, in which the left umbrella-type differential output wheel (801) and the right umbrella-type differential output wheel (802) together couple to the umbrella-type planetary gear set (803), and the umbrella-type planetary gear set (803) is installed to the umbrella-type planetary gear power transmission rocker arm (804), and transmits the rotary kinetic energy between the differential gear set (800) and the first transmission (301) through the umbrella-type planetary gear power transmission rocker arm (804), and/or transmits the rotary kinetic energy between the second transmission (302) and the umbrella-type planetary gear power transmission rocker arm (804) through the controllable clutch unit (CL500); and
the above structures constituting the dual gear train driving structure at input side of basin-type gear, in which the differential output shaft (311) and the differential output shaft (312) of the differential gear set assembly (300) are driven by the first driving unit (101) and/or the second driving unit (201) to implement differential operation.

9. The dual drive gear train driving structure at input side of basin-type gear as claimed in Claim 6, in which the controllable clutch unit (CL5011) is further installed between the umbrella-type planetary gear power transmission rocker arm (804) and the driving wheel group of the first transmission, and the controllable clutch unit (CL5012) is further installed between the umbrella-type planetary gear power transmission rocker arm (804) and the driving wheel group of the second transmission (302), so as to control engaged or disengaged operation in various permutations and combinations between the controllable clutch unit (CL5011) and the controllable clutch unit (CL5012) on the basis of operational function, the main components including:
-- differential gear set assembly (300): equipped with the controllable clutch units (CL5011) and (CL5012), in which the controllable clutch unit (CL5011) is installed between the umbrella-type planetary gear power transmission rocker arm (804) and the driving wheel group of the first transmission, and the controllable clutch unit (CL5012) is installed between the umbrella-type planetary gear power transmission rocker arm (804) and the driving wheel group of the second transmission (302), so as to control engaged or disengaged operation in various permutations and combinations between the controllable clutch unit (CL5011) and the controllable clutch unit (CL5012) on the basis of operational function, including that the first transmission (301) is constituted by the first transmission input bevel gear (503) and the basin-type bevel gear of the first transmission (504), and the first driving unit (101) drives the first transmission input bevel gear (503), then the first transmission input bevel gear (503) drives the basin-type bevel gear of the first transmission (504), and further drives the umbrella-type planetary gear power transmission rocker arm (804) through the controllable clutch unit (CL5011); and/or the rotary kinetic energy of the second driving unit (201) drives the umbrella-type planetary gear power transmission rocker arm (804) of the differential gear set (800) through the second transmission (302) and the controllable clutch unit (CL5012); and the differential gear set (800) is installed with the differential output shaft (311) and the differential output shaft (312) to coaxially output externally, and is equipped with the case and the bearing of differential gear set assembly;
-- controllable clutch units (CL5011), (CL5012): constituted by clutch unit or structure capable of performing the function of transmission engagement or disengagement, which is driven by human power, and/or electric power, and/or magnetic force, and/or machine power, and/or atmospheric pressure, and/or hydraulic pressure, and/or centrifugal force, and is equipped with the rotary input side and the rotary output side;
-- differential gear set (800): related to the umbrella-type differential gear constituted by the umbrella-type gear or the umbrella-type friction wheel, in which the left umbrella-type differential output wheel (801) and the right umbrella-type differential output wheel (802) together couple to the umbrella-type planetary gear set (803), and the umbrella-type planetary gear set (803) is installed to the umbrella-type planetary gear power transmission rocker arm (804), and transmits the rotary kinetic energy between the umbrella-type planetary gear power transmission rocker arm (804) and the first transmission (301) through the controllable clutch unit (CL5011), and/or transmits the rotary kinetic energy between the umbrella-type planetary gear power transmission rocker arm (804) and the second transmission (302) through the controllable clutch unit (CL5012); and
the above structures constituting the dual gear train driving structure at input side of basin-type gear, in which the differential output shaft (311) and the differential output shaft (312) of the differential gear set assembly (300) are driven by the first driving unit (101) and/or the second driving unit (201) to implement differential operation.

10. The dual drive gear train driving structure at input side of basin-type gear as claimed in Claim 8, further comprising controllable clutch unit (CL5011) installed between one side of the umbrella-type planetary gear power transmission rocker arm (804) and the basin-type bevel gear of the first transmission (504), while the controllable clutch unit (CL5012) is installed between the other side of the umbrella-type planetary gear power transmission rocker arm (804) and the second transmission (302), the main components including:
-- differential gear set assembly (300): equipped with the controllable clutch units (CL5011) and (CL5012), so as to control engaged or disengaged operation in various permutations and combinations between the controllable clutch unit (CL5011) and the controllable clutch unit (CL5012) on the basis of operational function, including that the first transmission (301) is constituted by the first transmission input bevel gear (503) and the basin-type bevel gear of the first transmission (504), and the first driving unit (101) drives the first transmission input bevel gear (503), then the first transmission input bevel gear (503) drives the basin-type bevel gear of the first transmission (504), and further drives the umbrella-type planetary gear power transmission rocker arm (804) through the controllable clutch unit (CL5011); and/or the rotary kinetic energy of the second driving unit (201) drives the umbrella-type planetary gear power transmission rocker arm (804) through the second transmission (302) and the controllable clutch unit (CL5012); -- controllable clutch units (CL5011), (CL5012): constituted by clutch unit or structure capable of performing the function of transmission engagement or disengagement, which is driven by human power, and/or electric power, and/or magnetic force, and/or machine power, and/or atmospheric pressure, and/or hydraulic pressure, and/or centrifugal force, and is equipped with the rotary input side and the rotary output side; and
-- differential gear set (800): transmits the rotary kinetic energy between the umbrella-type planetary gear power transmission rocker arm (804) and the first transmission (301) through the controllable clutch unit (CL5011), and/or transmits the rotary kinetic energy between the umbrella-type planetary gear power transmission rocker arm (804) and the second transmission (302) through the controllable clutch unit (CL5012).

11. The dual drive gear train driving assembly of any one of claim 6 to claim 10, wherein a speed variable transmission is further installed between the first driving unit (101), the controllable clutch (CL101), and the first transmission (301), so that the first driving unit drives the first transmission through the controllable clutch (CL101) and the variable speed transmission.

12. A dual drive gear train driving structure , wherein a differential gear set input rocker arm (804) driven by the basin-type bevel gear (504) in a differential gear set assembly (300) is made to be driven by two sets of transmissions (301, 302), in which a first transmission (301) transmits rotary kinetic energy between the differential gear set input rocker arm (804) and an engine (101), and a second transmission (302) transmits rotary kinetic energy between the differential gear set input rocker arm (804) and a second driving unit (201), and one or both of the transmissions (301, 302) drives the differential gear set input rocker arm (804), in which the umbrella-type planetary gear power transmission rocker arm (804) of the differential gear set (800) is installed at two sides of the differential gear set (800) the first transmission comprises a basin-type bevel gear (504) and an input bevel gear (503), and the second transmission comprises a basin-type bevel gear (5042) and an input bevel gear (507), the two sets are in separation, wherein the first transmission input bevel gear (503) is driven by the first driving unit (101), then is through the basin-type bevel gear of the first transmission (504) to drive one side of the umbrella-type planetary gear power transmission rocker arm (804), while the second transmission input bevel gear (507) is driven by the second driving unit (201), then through the basin-type bevel gear (5042) drives the other side of the umbrella-type planetary gear power transmission rocker arm (804), wherein the umbrella-type planetary gear power transmission rocker arm (804) transmits the rotary kinetic energy to the differential gear set (800), the main components including:
-- controllable clutch unit (CL101): constituted by clutch unit or structure capable of performing the function of transmission engagement or disengagement, which is driven by human power, and/or electric power, and/or magnetic force, and/or machine power, and/or atmospheric pressure, and/or hydraulic pressure, and/or centrifugal force, and is equipped with the rotary input side and the rotary output side;
-- differential gear set (800): related to the umbrella-type differential gear constituted by the umbrella-type gear or the umbrella-type friction wheel, in which the left umbrella-type differential output wheel (801) and the right umbrella-type differential output wheel (802) together couple to the umbrella-type planetary gear set (803), and the umbrella-type planetary gear set (803) is installed to the umbrella-type planetary gear power transmission rocker arm (804), and transmits the rotary kinetic energy between the differential gear set (800) and the first transmission (301) and/or the second transmission (302) through the umbrella-type planetary gear power transmission rocker arm (804); and
the above structures constituting the dual gear train driving structure at input side of basin-type gear, in which the differential output shaft (311) and the differential output shaft (312) of the differential gear set assembly (300) are driven by the first driving unit (101) and/or the second driving unit (201) to implement differential operation.

13. The dual drive gear train driving structure at input side of basin-type gear as claimed in Claim 12, further comprising controllable clutch unit (CL500, CL5012)installed between the basin-type bevel gear of the second transmission (5042) and the umbrella-type planetary gear power transmission rocker arm (804), wherein:
the second transmission input bevel gear (507) is driven by the second driving unit (201), then is through the basin-type bevel gear of the second transmission (5042) to drive the controllable clutch unit (CL500, CL5012), and to further drive the other side of the umbrella-type planetary gear power transmission rocker arm (804); and
-- controllable clutch unit (CL500, CL5012) is constituted by the clutch unit or structure capable of performing the function of transmission engagement or disengagement, which is driven by human power, and/or electric power, and/or magnetic force, and/or machine power, and/or atmospheric pressure, and/or hydraulic pressure, and/or centrifugal force, and is equipped with the rotary input side and the rotary output side; rotary kinetic energy is transmitted between the differential gear set (800) and the second transmission (302) through the controllable clutch unit (CL500, CL5012); and

14. The dual gear train driving structure at input side of basin-type gear as claimed in Claim 13, further comprising controllable clutch unit (CL5011) installed between the basin-type bevel gear of the first transmission (504) and the umbrella-type planetary gear power transmission rocker arm (804),
wherein the first transmission input bevel gear (503) is driven by the first driving unit (101), then is through the basin-type bevel gear of the first transmission (504) to drive the controllable clutch unit (CL5011), and further drives one side of the umbrella-type planetary gear power transmission rocker arm (804), whereas, the second transmission input bevel gear (507) is driven by the second driving unit (201), then is through the basin-type bevel gear of the second transmission (5042) to drive the controllable clutch unit (CL5012), and to further drive the other side of the umbrella-type planetary gear power transmission rocker arm (804);
-- controllable clutch units (CL5011) is constituted by the clutch unit or structure capable of performing the function of transmission engagement or disengagement, which is driven by human power, and/or electric power, and/or magnetic force, and/or machine power, and/or atmospheric pressure, and/or hydraulic pressure, and/or centrifugal force, and is equipped with the rotary input side and the rotary output side;
-- the differential gear set (800) transmits rotary kinetic energy between the umbrella-type planetary gear power transmission rocker arm (804) and the first transmission (301) through the controllable clutch unit (CL5011), and/or transmits rotary kinetic energy between the umbrella-type planetary gear power transmission rocker arm (804) and the second transmission (302) through the controllable clutch unit (CL5012).

## Patentansprüche

1. Getriebezug-Antriebsstruktur mit Doppelantrieb, wobei ein durch ein beckenförmiges Kegelradgetriebe angetriebener Eingangskipphebel (504) eines Differenzialgetriebes durch zwei Getriebesätze (301, 302) angetrieben wird, wobei ein erstes Getriebe (301) kinetische Drehenergie zwischen dem Eingangskipphebel (804) des Differenzialgetriebes und einem Motor (101) überträgt, und ein zweites Getriebe (302) kinetische Drehenergie zwischen dem Eingangskipphebel (804) des Differenzialgetriebes und einer zweiten Antriebseinheit (201), und wobei ein oder beide Getriebe (301, 302) den Eingangskipphebel (804) des Differenzialgetriebes antreibt, umfassend:
Differenzialgetriebeeinheit (300): hierzu gehören das erste Getriebe (301), bestehend aus dem Eingangskegelrad des ersten Getriebes (503) und dem beckenförmigen Kegelrad des ersten Getriebes (504), welches über die steuerbare Kupplungseinheit (CL101) betrieben wird und/oder das Getriebe überträgt die kinetische Drehenergie zwischen der ersten Antriebseinheit (101) und dem regenschirmartigen Kraftübertragungs-Kipphebel (804) des Planetengetriebes des Differenzialgetriebes (800); hierzu gehört auch das zweite Getriebe (302), welches aus dem Eingangsgetriebe (505) des zweiten Getriebes und das Zahnrad des zweiten Getriebes (506), welches zur Übertragung der kinetischen Drehenergie zwischen der zweiten Antriebseinheit (201) und dem Kraftübertragungs-Kipphebel (804) des Differenzialgetriebes (800), und das Differenzialgetriebe (800) ist mit der Differenzial-Abtriebswelle (311) und der Differenzial-Abtriebswelle (312) versehen ist, um einen koaxialen Ausgang zu gewährleisten; außerdem sind hierin das Gehäuse und das Lager der Differenzialgetriebeeinheit enthalten;
- eine steuerbare Kupplungseinheit (CL101): diese besteht aus der Kupplungseinheit oder einer zur Ausführung der Funktion der Ein- und Auskupplung des Getriebes geeigneten Struktur, die durch menschliche Kraft und/oder elektrische Energie und/oder Magnetkraft und/oder Maschinenkraft und/oder atmosphärischen Druck und/oder hydraulischen Druck und oder Zentrifugalkraft angetrieben wird und mit der rotativen Eingangs- und Ausgangsseite versehen ist, die zwischen der ersten Antriebseinheit und dem Eingangskegelrad (503) des ersten Getriebes (301) angeordnet sind.
- Differenzialgetriebe (800): Dieses steht mit dem regenschirmartigen Getriebe, das aus dem regenschirmartigen Zahnrad und dem regenschirmartigen Reibrad, in dem das linke regenschirmartige Differenzial-Ausgangsrad (801) und das rechte regenschirmartige Differenzial-Ausgangsrad (802) miteinander gekoppelt sind, um den regenschirmartigen Planetengetriebesatz (803) zu bilden, und der regenschirmartige Planetengetriebesatz
(803) ist auf dem Kraftübertragungs-Kipphebel (804) installiert ist und überträgt die kinetische Drehenergie zwischen dem Differenzialgetriebe (800) und dem ersten Getriebe (301) und/oder dem zweiten Getriebe (302) durch den Kraftübertragungs-Kipphebel (804); und
- die steuerbare Kupplungseinheit (CL201), die ferner zwischen der Ausgangsklemme des rotativen Teils der elektrischen Maschine, aus der ein einzelner Satz der zweiten Antriebseinheit (201) besteht, und dem Eingangs-Zahnrad (505) des zweiten Getriebes, um den ein- oder ausgekuppelten Betrieb zwischen der Ausgangsquelle des rotativen Teils der elektrischen Maschine und dem Eingangs-Zahnrad (505) des zweiten Getriebes zu steuern;
- aus den obigen Strukturen besteht die Antriebsstruktur mit doppeltem Getriebezug auf der Eingangsseite des beckenförmigen Zahnrads, in dem die Differenzial-Abtriebswelle (311) und die Differenzial-Abtriebswelle (312) der Differenzialgetriebeeinheit (300) durch die erste Antriebseinheit (101) und/oder die zweite Antriebseinheit (201) angetrieben wird, um den Betrieb des Differenzials auszuführen.

2. Getriebezug-Antriebsstruktur mit Doppelantrieb nach Anspruch 1, wobei zwei Sätze Ausgangsklemmen am rotativen Teil der elektrischen Maschine, aus der die zweite Antriebseinheit (201) besteht, ferner durch das drehzahlveränderliche Getriebe (T201) und dann durch die mit dem Eingangs-Zahnrad (505) des zweiten Getriebes verbundene steuerbare Kupplungseinheit (CL201), und mittels des drehzahlveränderlichen Getriebes (T201) zur Änderung des Geschwindigkeitsverhältnisses zwischen der Ausgangsklemme des rotativen Teils der elektrischen Maschine und der Eingangsklemme der steuerbaren Kupplungseinheit (CL201) und mittels der steuerbaren Kupplungseinheit (CL201) der ein- oder ausgekuppelte Betrieb zwischen der Ausgangsklemme des drehzahlveränderlichen Getriebes (T201) und dem zweiten Eingangs-Zahnrad des zweiten Getriebes (505) gesteuert wird.

3. Getriebezug-Antriebsstruktur mit Doppelantrieb nach Anspruch 1, wobei ferner zwei elektrische Maschinen installiert sind; also stellen die durch die beiden elektrischen Maschinen angetriebenen rotativen Speisequellen die zweiten Antriebseinheiten (201) und (202) und die beiden steuerbaren Kupplungseinheiten (CL201) und (CL202) zwischen jeder der Ausgangsklemmen der rotativen Teile der beiden elektrischen Maschinen und dem Eingangs-Zahnrad des zweiten Getriebes (505) einzeln angeordnet sind, um so mittels beider oder einer der elektrischen Maschinen das Eingangs-Zahnrad des zweiten Getriebes (505) anzutreiben.

4. Getriebezug-Antriebsstruktur mit Doppelantrieb nach Anspruch 3, wobei die Ausgangsklemmen der rotativen Teile der beiden elektrischen Maschinen über die steuerbaren Kupplungseinheiten (CL201) und (CL202) und anschließend durch das mit dem Eingangs-Zahnrad (505) des zweiten Getriebes verbundenen drehzahlveränderliche Getriebe (T201) und (T202) , mittels zweier oder einer der elektrischen Maschine das Eingangs-Zahnrad (505) des zweiten Getriebes antreiben.

5. Getriebezug-Antriebsstruktur mit Doppelantrieb nach Anspruch 3, wobei die Ausgangsklemmen der rotativen Teile der beiden elektrischen Maschinen über die drehzahlveränderlichen Getriebe (T201) und (T202) und anschließend durch die mit dem Eingangs-Zahnrad (505) des zweiten Getriebes verbundenen steuerbaren Kupplungseinheiten (CL201) und (CL202) mit einer oder beiden elektrischen Maschinen das Eingangs-Zahnrad (505) des zweiten Getriebes antreiben.

6. Getriebezug-Antriebsstruktur mit Doppelantrieb, wobei ein durch das beckenförmige Kegelrad (504) angetriebener Eingangs-Kipphebel (804) eines Differenzialgetriebes in einer Differenzialgetriebeeinheit durch zwei Getriebesätze (301, 302) angetrieben wird, wobei ein erstes Getriebe (301) die kinetische Drehenergie zwischen dem Eingangs-Kipphebel (804) des Differenzialgetriebes und einer Maschine überträgt, und ein zweites Getriebe (302) kinetischen Drehenergie zwischen dem Eingangs-Kipphebel (804) des Differenzialgetriebes und einer zweiten Antriebseinheit (201) überträgt, und ein oder beide Getriebe (301, 302) den Eingangs-Kipphebel (804) des Differenzialgetriebes antreiben, wobei die Ausgangsklemme des rotativen Teils der elektrischen Maschine, aus der der Einzelsatz der zweiten Antriebseinheit (201) besteht, den Kraftübertragungs-Kipphebel (804) des regenschirmartigen Planetengetriebes über das zweite Getriebe (302) und die steuerbare Kupplungseinheit (CL500, CL05012) antreibt, wobei die Hauptkomponenten umfassen:
- Differenzialgetriebeeinheit (300): Die steuerbare Kupplungseinheit (CL500, CL5012) ist zwischen der Antriebsradgruppe des ersten Getriebes und der Antriebsradgruppe des zweiten Getriebes angeordnet, um den ein- und ausgekuppelten Betrieb zu steuern; wobei das Eingangs-Kegelrad (503) des ersten Getriebes und das beckenförmige Kegelrad (504) des ersten Getriebes das erste Getriebe (301) bildet, und die erste Antriebseinheit (101) das Eingangs-Kegelrad (503) des ersten Getriebes antreibt; dann treibt das Eingangs-Kegelrad (503) des ersten Getriebes das beckenförmige Kegelrad des ersten Getriebes (504) an, und treibt ferner den Kraftübertragungs-Kipphebel (804) des regenschirmartigen Planetengetriebes an; und/oder die kinetische Drehenergie der zweiten Antriebseinheit (201) treibt den Kraftübertragungs-Kipphebel (804) des regenschirmartigen Planetengetriebes des Differenzialgetriebes (800) über das zweite Getriebe (302), und die steuerbare Kupplungseinheit (CL500, CL5012); und das Differenzialgetriebe (800) ist mit der Differenzial-Abtriebswelle (311) und der Differenzial-Abtriebswelle (312) ausgestattet, um einen koaxialen Ausgang zu gewährleisten; hierzu gehören auch das Gehäuse und Lager der Differenzialgetriebeeinheit;
- steuerbare Kupplungseinheiten (CL101), (CL500, CL5012): Diese bestehen aus der Kupplungseinheit oder der Struktur, die die Ein- und Auskupplungsfunktion des Getriebes ausführen kann, was durch menschliche und/oder elektrische und/oder magnetische und/oder mechanische Kraft und/oder atmosphärischen und/oder hydraulischen Druck und/oder Zentrifugalkraft angetrieben wird und mit der rotativen Eingangsseite und der rotativen Ausgangsseite ausgestattet ist;
- Differenzialgetriebe (800): Dies steht mit dem durch das regenschirmartige Rad oder Riebrad ausgebildete regenschirmartige Differenzial-Zahnrad in Verbindung, wobei das linke regenschirmartige Differenzial-Ausgangsrad (801) und das rechte regenschirmartige Differenzial-Ausgangsrad (802) sich gemeinsam mit dem regenschirmartigen Planetengetriebesatz (803) koppeln, und der regenschirmartige Planetengetriebesatz (803) am Kraftübertragungs-Kipphebel (804) des regenschirmartigen Planetengetriebesatzes angeordnet ist und die kinetische Drehenergie zwischen dem Differenzialgetriebe (800) und dem ersten Getriebe (301) und/oder dem zweiten Getriebe (302) über den Kraftübertragungs-Kipphebel (804) des regenschirmartigen Planetengetriebes; und
wobei die obigen Strukturen die Getriebezug-Antriebsstruktur mit Doppelantrieb auf der Eingangsseite des beckenförmigen Getriebes bilden, in dem die Differenzial-Abtriebswelle (311) und die Differenzial-Abtriebswelle (312) der Differenzialgetriebeeinheit (300) durch die erste Antriebseinheit (101) und/oder die zweite Antriebseinheit (201) angetrieben werden, um den Betrieb des Differenzials zu gewährleisten.

7. Getriebezug-Antriebsstruktur mit Doppelantrieb nach Anspruch 6, ferner umfassend eine zwischen der ersten Antriebseinheit und dem Eingangs-Kegelrad (503) des ersten Getriebes angeordnete steuerbare Kupplungseinheit.

8. Getriebezug-Antriebsstruktur mit Doppelantrieb nach Anspruch 1, wobei der Kraftübertragungs-Kipphebel (804) des regenschirmartigen Planetengetriebes ferner auf beiden Seiten des Differenzialgetriebes (800) angeordnet ist, wobei eine Seite des Kraftübertragungs-Kipphebels (804) des Planetengetriebes mit dem beckenförmigen Kegelrad des ersten Getriebes (504) kombiniert wird und sich die andere Seite über eine steuerbare Kupplungseinheit (CL500, CL5012) mit dem zweiten Getriebe (302) koppelt, um die Ein- und Auskupplung zwischen dem zweiten Getriebe (302) und dem Differenzialgetriebe (800) zu steuern, wobei die Hauptkomponenten umfassen:
- Differenzialgetriebeeinheit (300): Die steuerbare Kupplungseinheit (CL500, CL5012) ist zwischen der Antriebsradgruppe des zweiten Getriebes (302) und dem Kraftübertragungs-Kipphebel (804) des regenschirmartigen Planetengetriebes angeordnet ist, um die Ein- und Auskupplung zu steuern, wobei das Eingangs-Kegelrad (503) des ersten Getriebes und das beckenförmige Kegelrad des ersten Getriebes (504) das erste Getriebe (301) bilden, und die erste Antriebseinheit (101) über die steuerbare Kupplungseinheit (CL101) das Eingangs-Kegelrad (503) des ersten Getriebes antreibt, und das Eingangs-Kegelrad (503) das beckenförmige Kegelrad des ersten Getriebes (504) antreibt und ferner den Kraftübertragungs-Kipphebel (804) des regenschirmartigen Planetengetriebes antreibt; und/oder die kinetische Drehenergie der zweiten Antriebseinheit (201) treibt den Kraftübertragungs-Kipphebel (804) des regenschirmartigen Planetengetriebes des Differenzialgetriebes (800) über das zweite Getriebe (302) und die steuerbare Kupplungseinheit (CL500, CL5012) an; und das Differenzialgetriebe (800) ist mit der Differenzial-Abtriebswelle (311) und der Differenzial-Abtriebswelle (312) ausgestattet, um einen koaxialen Ausgang zu gewährleisten, und ist mit dem Gehäuse und dem Lager des Differenzialgetriebes ausgestattet;
- steuerbare Kupplungseinheiten (CL101), (CL500, CL5012): Diese bestehen aus der Kupplungseinheit oder der Struktur, die die Ein- und Auskupplungsfunktion ausführen kann, was durch menschliche und/oder elektrische und/oder magnetische und/oder mechanische Kraft und/oder atmosphärischen und/oder hydraulischen Druck und/oder Zentrifugalkraft angetrieben wird und mit der rotativen Eingangs- und Ausgangsseite ausgestattet ist;
- Differenzialgetriebe (800): Dies steht mit dem durch das regenschirmartige Getriebe oder das regenschirmartige Reibrad ausgebildeten regenschirmartigen Differenzialgetriebe in Verbindung, in dem das linke regenschirmartige Differenzial-Ausgangsrad (801) und das rechte regenschirmartige Differenzial-Ausgangsrad (802) sich zusammen mit dem regenschirmartigen Planetengetriebe (803) koppeln, und das regenschirmartige Planetengetriebe (803) am Kraftübertragungs-Kipphebel (804) des regenschirmartigen Planetengetriebes angeordnet ist und die kinetische Drehenergie zwischen dem Differenzialgetriebe (800) und dem ersten Getriebe (301) über den Kraftübertragungs-Kipphebel (804) des regenschirmartigen Planetengetriebes und/oder zwischen dem zweiten Getriebe (302) und dem Kraftübertragungs-Kipphebel (804) des regenschirmartigen Planetengetriebes über die steuerbare Kupplungseinheit (CL500) überträgt; und
wobei die obigen Strukturen auf der Eingangsseite des beckenförmigen Zahnrads die Getriebezug-Antriebsstruktur mit Doppelantrieb bilden, in der die Differenzial-Abtriebswelle (311) und die Differenzial-Abtriebswelle (312) der Differenzialgetriebeeinheit (300) durch die erste Antriebseinheit (101) und/oder die zweite Antriebseinheit (201) angetrieben werden, um den Differenzialbetrieb zu gewährleisten.

9. Getriebezug-Antriebsstruktur mit Doppelantrieb auf der Eingangsseite des beckenförmigen Zahnrads nach Anspruch 6, wobei die steuerbare Kupplungseinheit (CL5011) ferner zwischen dem Kraftübertragungs-Kipphebel (804) des regenschirmartigen Planetengetriebes und der Antriebsradgruppe des ersten Getriebes angeordnet ist, und die steuerbare Kupplungseinheit (CL5012) ferner zwischen dem Kraftübertragungs-Kipphebel (804) des regenschirmartigen Planetengetriebes und der Antriebsradgruppe des zweiten Getriebes (302) angeordnet ist, um die Ein- und Auskupplung in verschiedenen Formen und Kombinationen zwischen der steuerbaren Kupplungseinheit (CL5011) und der steuerbaren Kupplungseinheit (CL5012) aufgrund der operativen Funktion zu steuern, wobei die Hauptkomponenten umfassen:
- Differenzialgetriebeeinheit (300): Diese ist mit den steuerbaren Kupplungseinheiten (CL5011) und (CL5012) ausgestattet, wobei die steuerbare Kupplungseinheit (CL5011) zwischen dem Kraftübertragungs-Kipphebel (804) des regenschirmartigen Planetengetriebes und der Antriebsradgruppe des ersten Getriebes angeordnet ist, und die steuerbare Kupplungseinheit (CL5012) zwischen dem Kraftübertragungs-Kipphebel (804) und der Antriebsradgruppe des zweiten Getriebes (302) angeordnet ist, um die Ein- und Auskupplung in verschiedenen Formen und Kombinationen zwischen der steuerbaren Kupplungseinheit (CL5011) und der steuerbaren Kupplungseinheit (CL5012) aufgrund der operativen Funktion zu steuern; hierzu gehört auch, dass das erste Getriebe (301) durch das Eingangs-Kegelrad (503) und das beckenförmige Kegelrad des ersten Getriebes (504) gebildet ist, und die erste Antriebseinheit (101) das Eingangs-Kegelrad (503) des ersten Getriebes antreibt; dann treibt das Eingangs-Kegelrad (503) das beckenförmige Kegelrad (504) an, und treibt ferner den Kraftübertragungs-Kipphebel (804) des regenschirmartigen Planetengetriebes über die steuerbare Kupplungseinheit (CL5011); und/oder die kinetische Drehenergie der zweiten Antriebseinheit (201) treibt den Kraftübertragungs-Kipphebel (804) des regenschirmartigen Planetengetriebes des Differenzialgetriebes (800) über das zweite Getriebe (302) und die steuerbare Kupplungseinheit (CL5012) an; und das Differenzialgetriebe (800) ist mit der Differenzial-Abtriebswelle (311) und der Differenzial-Abtriebswelle (312) ausgestattet, um einen koaxialen Ausgang zu gewährleisten, und ist mit dem Gehäuse und dem Lager der Differenzialgetriebeeinheit ausgestattet;
- steuerbare Kupplungseinheiten (CL5011, CL5012): Diese bestehen aus der Kupplungseinheit oder der Struktur, die die Ein- und Auskupplungsfunktion ausführen kann, was durch menschliche und/oder elektrische und/oder magnetische und/oder mechanische Kraft und/oder atmosphärischen und/oder hydraulischen Druck und/oder Zentrifugalkraft angetrieben wird und mit der rotativen Eingangs- und Ausgangsseite ausgestattet ist;
- Differenzialgetriebe (800): Dies steht mit dem durch das regenschirmartige Getriebe oder das regenschirmartige Reibrad ausgebildeten regenschirmartigen Differenzialgetriebe in Verbindung, in dem das linke regenschirmartige Differenzial-Ausgangsrad (801) und das rechte regenschirmartige Differenzial-Ausgangsrad (802) sich zusammen mit dem regenschirmartigen Planetengetriebe (803) koppeln, und das regenschirmartige Planetengetriebe (803) am Kraftübertragungs-Kipphebel (804) des regenschirmartigen Planetengetriebes angeordnet ist und die kinetische Drehenergie zwischen dem Differenzialgetriebe (800) und dem ersten Getriebe (301) über die steuerbare Kupplungseinheit (CL5011) und/oder zwischen dem Kraftübertragungs-Kipphebel (804) des regenschirmartigen Planetengetriebes und dem zweiten Getriebe (302) über die steuerbare Kupplungseinheit (CL5012) überträgt; und
wobei die obigen Strukturen auf der Eingangsseite des beckenförmigen Zahnrads die Getriebezug-Antriebsstruktur mit Doppelantrieb bilden, in der die Differenzial-Abtriebswelle (311) und die Differenzial-Abtriebswelle (312) der Differenzialgetriebeeinheit (300) durch die erste Antriebseinheit (101) und/oder die zweite Antriebseinheit (201) angetrieben werden, um den Differenzialbetrieb zu gewährleisten.

10. Getriebezug-Antriebsstruktur mit Doppelantrieb auf der Eingangsseite des beckenförmigen Zahnrads nach Anspruch 8, ferner umfassend eine zwischen einer Seite des Kraftübertragungs-Kipphebels (804) des regenschirmartigen Planetengetriebes und dem beckenförmigen Kegelrad des ersten Getriebes (504) angeordnete steuerbare Kupplungseinheit (CL5011), wobei die steuerbare Kupplungseinheit (CL5012) zwischen der anderen Seite des Kraftübertragungs-Kipphebels (804) des regenschirmartigen Planetengetriebes und dem zweiten Getriebe (302) angeordnet ist, wobei die Hauptkomponenten umfassen:
- Differenzialgetriebeeinheit (300): Diese ist mit den steuerbaren Kupplungseinheiten (CL5011) und (CL5012) ausgestattet, um die Ein- und Auskupplung in verschiedenen Formen und Kombinationen zwischen der steuerbaren Kupplungseinheit (CL5011) und der steuerbaren Kupplungseinheit (CL5012) aufgrund der operativen Funktion; hierzu gehört auch, dass das erste Getriebe (301) durch das Eingangs-Kegelrad (503) und das beckenförmige Kegelrad des ersten Getriebes (504) gebildet ist, und die erste Antriebseinheit (101) das Eingangs-Kegelrad (503) des ersten Getriebes antreibt; dann treibt das Eingangs-Kegelrad (503) das beckenförmige Kegelrad (504) an, und treibt ferner den Kraftübertragungs-Kipphebel (804) des regenschirmartigen Planetengetriebes über die steuerbare Kupplungseinheit (CL5011) an; und/oder die kinetische Drehenergie der zweiten Antriebseinheit (201) treibt den Kraftübertragungs-Kipphebel (804) des regenschirmartigen Planetengetriebes über das zweite Getriebe (302) und die steuerbare Kupplungseinheit (CL5012) an;
- steuerbare Kupplungseinheiten (CL5011, CL5012): Diese bestehen aus der Kupplungseinheit oder der Struktur, die die Ein- und Auskupplungsfunktion ausführen kann, was durch menschliche und/oder elektrische und/oder magnetische und/oder mechanische Kraft und/oder atmosphärischen und/oder hydraulischen Druck und/oder Zentrifugalkraft angetrieben wird und mit der rotativen Eingangs- und Ausgangsseite ausgestattet ist; und
- Differenzialgetriebe (800): Überträgt die kinetische Drehenergie zwischen dem Kraftübertragungs-Kipphebel (804) des regenschirmartigen Planetengetriebes und dem ersten Getriebe (301) über die steuerbare Kupplungseinheit (CL5011); und/oder überträgt die kinetische Drehenergie zwischen dem Kraftübertragungs-Kipphebel (804) des Planetengetriebes und dem zweiten Getriebe (302) über die steuerbare Kupplungseinheit (CL5012).

11. Getriebezug-Antriebsstruktur mit Doppelantrieb nach einem der Ansprüche 6 bis 10, wobei ferner ein drehzahlveränderliches Getriebe zwischen der ersten Antriebseinheit (101), der steuerbaren Kupplung (CL101) und dem ersten Getriebe (301) derart angeordnet ist, dass die erste Antriebseinheit das erste Getriebe über die steuerbare Kupplung (CL101) und das drehzahlveränderliche Getriebe antreibt.

12. Getriebezug-Antriebsstruktur mit Doppelantrieb, wobei ein durch ein beckenförmiges Kegelradgetriebe (504) angetriebener Eingangskipphebel (804) eines Differenzialgetriebes in einer Differenzialgetriebeeinheit (300) durch zwei Getriebesätze (301, 302) angetrieben wird, wobei ein erstes Getriebe (301) kinetische Drehenergie zwischen dem Eingangskipphebel (804) des Differenzialgetriebes und einem Motor (101) überträgt, und ein zweites Getriebe (302) die kinetische Drehenergie zwischen dem Eingangskipphebel (804) und einer zweiten Antriebseinheit (201) überträgt, und ein oder beide Getriebe (301, 302) treiben den Eingangskipphebel (804) des Differenzialgetriebes an, wobei der Kraftübertragungs-Kipphebel (804) des regenschirmartigen Planetengetriebes des Differenzialgetriebes (800) auf zwei Seiten des Differenzialgetriebes (800) angeordnet ist, das erste Getriebe ein beckenförmiges Kegelrad (504) und ein Eingangs-Kegelrad (503) umfasst, und das zweite Getriebe ein beckenförmiges Kegelrad (5042) und ein Eingangs-Kegelrad (507) umfasst, beide Sätze voneinander getrennt sind, wobei der Eingangs-Kipphebel (503) des ersten Getriebes durch die erste Antriebseinheit (101) und durch das beckenförmige Kegelrad des ersten Getriebes (504) angetrieben wird, um eine Seite des Kraftübertragungs-Kipphebels (804) des regenschirmartigen Planetengetriebes anzutreiben, während das Eingangs-Kegelrad (507) des zweiten Getriebes durch die zweite Antriebseinheit (201) und durch das beckenförmige Kegelrad (5042) angetrieben wird, um die andere Seite des Kraftübertragungs-Kipphebels (804) regenschirmartigen Planetengetriebes anzutreiben, wobei der Kraftübertragungs-Kipphebel (804) des regenschirmartigen Planetengetriebes die kinetische Drehenergie auf den Differenzialgetriebesatz (800) überträgt, wobei die Hauptkomponenten umfassen:
- eine steuerbare Kupplungseinheit (CL101): diese besteht aus der Kupplungseinheit oder einer zur Ausführung der Funktion der Ein- und Auskupplung des Getriebes geeigneten Struktur, die durch menschliche und/oder elektrische und/oder magnetische und/oder mechanische Kraft und/oder atmosphärischen und/oder hydraulischen Druck und oder Zentrifugalkraft angetrieben wird und mit der rotativen Eingangs- und Ausgangsseite versehen ist;
- Differenzialgetriebe (800): Dieses steht mit dem regenschirmartigen Getriebe in Verbindung, das aus dem regenschirmartigen Zahnrad und dem regenschirmartigen Reibrad besteht, in dem das linke regenschirmartige Differenzial-Ausgangsrad (801) und das rechte regenschirmartige Differenzial-Ausgangsrad (802) miteinander gekoppelt sind, und gemeinsam mit dem regenschirmartigen Planetengetriebesatz (803) gekoppelt sind, und der regenschirmartige Planetengetriebesatz (803) ist auf dem Kraftübertragungs-Kipphebel (804) installiert ist und überträgt die kinetische Drehenergie zwischen dem Differenzialgetriebe (800) und dem ersten Getriebe (301) und/oder dem zweiten Getriebe (302) durch den Kraftübertragungs-Kipphebel (804); und
aus den obigen Strukturen besteht die Antriebsstruktur mit doppeltem Getriebezug auf der Eingangsseite des beckenförmigen Zahnrads, in dem die Differenzial-Abtriebswelle (311) und die Differenzial-Abtriebswelle (312) der Differenzialgetriebeeinheit (300) durch die erste Antriebseinheit (101) und/oder die zweite Antriebseinheit (201) angetrieben wird, um den Betrieb des Differenzials auszuführen.

13. Getriebezug-Antriebsstruktur mit Doppelantrieb auf der Eingangsseite des beckenförmigen Zahnrads nach Anspruch 12, ferner umfassend die zwischen dem beckenförmigen Kegelrad des zweiten Getriebes (5042) und dem Kraftübertragungs-Kipphebel (804) des regenschirmartigen Planetengetriebes angeordnete steuerbare Kupplungseinheit (CL500, CL5012), wobei:
das Eingangs-Kegelrad (507) des zweiten Getriebes durch die zweite Antriebseinheit (201) und dann durch das beckenförmige Kegelrad des zweiten Getriebes (5042) angetrieben wird, um die steuerbare Kupplungseinheit (CL500, CL5012) anzutreiben und ferner die andere Seite des Kraftübertragungs-Kipphebels (804) des regenschirmartigen Planetengetriebes anzutreiben; und
- die steuerbare Kupplungseinheit (CL500, CL5012) besteht aus der Kupplungseinheit oder der Struktur, die die Ein- und Auskupplungsfunktion des Getriebes ausführen kann, was durch menschliche und/oder elektrische und/oder magnetische und/oder mechanische Kraft und/oder atmosphärischen und/oder hydraulischen Druck und/oder Zentrifugalkraft angetrieben wird und mit der rotativen Eingangsseite und der rotativen Ausgangsseite ausgestattet ist; kinetische Drehenergie wird zwischen dem Differenzialgetriebe (800) und dem zweiten Getriebe (302) über die steuerbare Kupplungseinheit (CL500, C15012) angetrieben wird; und

14. Getriebezug-Antriebsstruktur mit Doppelantrieb auf der Eingangsseite des beckenförmigen Zahnrads nach Anspruch 13, ferner umfassend die zwischen dem beckenförmigen Kegelrad des ersten Getriebes (504) und dem Kraftübertragungs-Kipphebel des regenschirmartigen Planetengetriebes (804) angeordnete steuerbare Kupplungseinheit (CL5011),
wobei das Eingangs-Kegelrad (503) des ersten Getriebes durch die erste Antriebseinheit (101) und dann durch das beckenförmige Kegelrad des ersten Getriebes (504) angetrieben wird, um die steuerbare Kupplungseinheit (CL5011) anzutreiben, und treibt ferner eine Seite des Kraftübertragungs-Kipphebels (804) des regenschirmartigen Planetengetriebes an, wobei das Eingangs-Kegelrad (507) des zweiten Getriebes durch die zweite Antriebseinheit (201) und dann durch das beckenförmige Kegelrad des zweiten Getriebes (5042) angetrieben wird, um die steuerbare Kupplungseinheit (CL5012) anzutreiben und ferner die andere Seite des Kraftübertragungs-Kipphebels (804) des regenschirmartigen Planetengetriebes anzutreiben;
- die steuerbaren Kupplungseinheiten (CL500, CL5012) bestehen aus der Kupplungseinheit oder der Struktur, die die Ein- und Auskupplungsfunktion des Getriebes ausführen kann, was durch menschliche und/oder elektrische und/oder magnetische und/oder mechanische Kraft und/oder atmosphärischen und/oder hydraulischen Druck und/oder Zentrifugalkraft angetrieben wird und mit der rotativen Eingangsseite und der rotativen Ausgangsseite ausgestattet ist;
- das Differenzialgetriebe (800) überträgt die kinetische Drehkraft zwischen dem Kraftübertragungs-Kipphebel (804) des regenschirmartigen Planetengetriebes und dem ersten Getriebe (301) über die steuerbare Kupplungseinheit (CL5011) und/oder überträgt die kinetische Drehenergie zwischen dem Kraftübertragungs-Kipphebel (804) des regenschirmartigen Planetengetriebes und dem zweiten Getriebe (302) über die steuerbare Kupplungseinheit (CL5012) überträgt.

## Revendications

1. Structure d'entraînement de train d'engrenages à double entraînement, dans laquelle un culbuteur d'entrée de train d'engrenages différentiel (804) entraîné par l'engrenage conique de type bassin (504) dans un ensemble train d'engrenages différentiel (300) est réalisé pour être entraîné par deux ensembles de transmissions (301, 302), dans lesquels une première transmission (301) transmet de l'énergie cinétique de rotation entre le culbuteur d'entrée de train d'engrenages différentiel (804) et un moteur (101) et une seconde transmission (302) transmet l'énergie cinétique de rotation entre le culbuteur d'entrée de train d'engrenages différentiel (804) et une seconde unité d'entraînement (201), et une ou les deux transmissions (301, 302) entraînent le culbuteur d'entrée de train d'engrenages différentiel (804), la structure d'entraînement de train d'engrenages à double d'entraînement comprenant :
un ensemble train d'engrenages différentiel (300) : comprenant la première transmission (301), constituée de l'engrenage conique d'entrée de première transmission (503) et de l'engrenage conique de type bassin de la première transmission (504), qui est utilisée par l'intermédiaire de l'unité d'embrayage commandable (CL101) et/ou la transmission pour transmettre l'énergie cinétique de rotation entre la première unité d'entraînement (101) et le culbuteur de transmission d'énergie de train épicycloïdal de type parapluie (804) du train d'engrenages différentiel (800), et comprenant la seconde transmission (302), constituée de l'engrenage d'entrée de seconde transmission (505) et de l'engrenage de transmission de la seconde transmission (506), qui est utilisée pour transmettre l'énergie cinétique de rotation entre la seconde unité d'entraînement (201) et le culbuteur de transmission d'énergie de train épicycloïdal de type parapluie (804) du train d'engrenages différentiel (800), et le train d'engrenages différentiel (800) est installé avec l'arbre de sortie de différentiel (311) et l'arbre de sortie de différentiel (312) pour sortir extérieurement de manière coaxiale, et le carter et le palier de l'ensemble train d'engrenages différentiel sont inclus ;
-- une unité d'embrayage commandable (CL101) : constituée d'une unité ou structure d'embrayage apte à remplir la fonction d'accouplement ou de désaccouplement de transmission, qui est entraînée par énergie humaine et/ou énergie électrique et/ou force magnétique et/ou puissance de machine et/ou pression atmosphérique et/ou pression hydraulique et/ou force centrifuge, et est équipée du côté d'entrée rotatif et du côté de sortie rotatif, située entre la première unité d'entraînement et l'engrenage conique d'entrée (503) de la première transmission (301) ;
-- un train d'engrenages différentiel (800) : associé à l'engrenage différentiel de type parapluie constitué d'un engrenage de type parapluie ou d'une roue de friction de type parapluie, dans lequel la roue de sortie de différentiel gauche de type parapluie (801) et la roue de sortie de différentiel droite de type parapluie (802) ensemble s'accouplent au train épicycloïdal de type parapluie (803), et le train épicycloïdal de type parapluie (803) est installé au culbuteur de transmission d'énergie à train épicycloïdal de type parapluie (804), et transmet l'énergie cinétique de rotation entre le train d'engrenages différentiel (800) et la première transmission (301) et/ou la seconde transmission (302) par l'intermédiaire du culbuteur de transmission d'énergie à train épicycloïdal de type parapluie (804) ; et
une unité d'embrayage commandable (CL201), installée en outre entre l'extrémité de sortie de la partie rotative de la machinerie électrique constituant l'ensemble unique de la seconde unité d'entraînement (201) et l'engrenage d'entrée de seconde transmission (505), pour commander le fonctionnement accouplé ou désaccouplé entre l'extrémité de sortie de la partie rotative de la machinerie électrique et l'engrenage d'entrée de seconde transmission (505) ;
les structures ci-dessus constituant la structure d'entraînement de train d'engrenages à double entraînement au côté d'entrée d'engrenage de type bassin, dans laquelle l'arbre de sortie de différentiel (311) et l'arbre de sortie de différentiel (312) de l'ensemble train d'engrenages différentiel (300) sont entraînés par la première unité d'entraînement (101) et/ou la seconde unité d'entraînement (201) pour mettre en oeuvre un fonctionnement différentiel.

2. Structure d'entraînement de train d'engrenages à double entraînement selon la revendication 1, dans laquelle deux ensembles d'extrémités de sortie de la partie rotative de la machinerie électrique constituant la seconde unité d'entraînement (201) passent en outre par la transmission à vitesse variable (T201), puis à travers l'unité d'embrayage commandable (CL201) reliée à l'engrenage d'entrée de seconde transmission (505), et au moyen de la transmission à vitesse variable (T201) pour modifier le rapport de vitesse entre l'extrémité de sortie de la partie rotative de la machinerie électrique et l'extrémité d'entrée de l'unité d'embrayage commandable (CL201), et au moyen de l'unité d'embrayage commandable (CL201) pour commander le fonctionnement accouplé ou désaccouplé entre l'extrémité de sortie de la transmission à vitesse variable (T201) et l'engrenage d'entrée de seconde transmission (505).

3. Structure d'entraînement de train d'engrenages à double entraînement selon la revendication 1, dans laquelle deux machineries électriques sont en outre installées, les sources d'énergie de rotation entraînées par les deux machineries électriques constituent ainsi les secondes unités d'entraînement (201) et (202), et les deux unités d'embrayage commandables (CL201) et (CL202) sont installées individuellement entre chacune des extrémités de sortie des parties rotatives des deux machineries électriques et l'engrenage d'entrée de seconde transmission (505), pour ainsi entraîner l'engrenage d'entrée de seconde transmission (505) au moyen des deux ou de l'une des machineries électriques.

4. Structure d'entraînement de train d'engrenages à double entraînement selon la revendication 3, dans laquelle les extrémités de sortie des parties rotatives des deux machineries électriques passent individuellement à travers les unités d'embrayage commandables (CL201) et (CL202), puis à travers les transmissions à vitesse variable (T201) et (T202) reliées à l'engrenage d'entrée de seconde transmission (505), pour ainsi entraîner l'engrenage d'entrée de seconde transmission (505) au moyen des deux ou de l'une des machineries électriques.

5. Structure d'entraînement de train d'engrenages à double entraînement selon la revendication 3, dans laquelle les extrémités de sortie des parties rotatives des deux machineries électriques passent individuellement à travers les transmissions à vitesse variable (T201) et (T202), puis à travers les unités d'embrayage commandables (CL201) et (CL202) reliées à l'engrenage d'entrée de seconde transmission (505), pour ainsi entraîner l'engrenage d'entrée de seconde transmission (505) au moyen des deux ou de l'une des machineries électriques.

6. Structure d'entraînement de train d'engrenages à double entraînement, dans laquelle un culbuteur d'entrée de train d'engrenages différentiel (804) entraîné par l'engrenage conique de type bassin (504) dans un ensemble train d'engrenages différentiel (300) est réalisé pour être entraîné par deux ensembles de transmissions (301, 302), dans lesquels une première transmission (301) transmet de l'énergie cinétique de rotation entre le culbuteur d'entrée de train d'engrenages différentiel (804) et un moteur (101), et une seconde transmission (302) transmet de l'énergie cinétique de rotation entre le culbuteur d'entrée de train d'engrenages différentiel (804) et une seconde unité d'entraînement (201), et une ou les deux transmissions (301, 302) entraînent le culbuteur d'entrée de train d'engrenages différentiel (804), l'extrémité de sortie de la partie rotative de la machinerie électrique constituant l'ensemble unique de la seconde unité d'entraînement (201) entraînant le culbuteur de transmission d'énergie de train épicycloïdal de type parapluie (804) par l'intermédiaire de la seconde transmission (302) et de l'unité d'embrayage commandable (CL500, CL5012), les principaux composants comprenant :
-- un ensemble train d'engrenages différentiel (300) : l'unité d'embrayage commandable (CL500, CL5012) est installée entre le groupe de roues d'entraînement de la première transmission et le groupe de roues d'entraînement de la seconde transmission pour commander le fonctionnement accouplé ou désaccouplé ; dans lequel l'engrenage conique d'entrée de première transmission (503) et l'engrenage conique de type bassin de la première transmission (504) constituent la première transmission (301), et la première unité d'entraînement (101) entraîne l'engrenage conique d'entrée de première transmission (503), puis l'engrenage conique d'entrée de première transmission (503) entraîne l'engrenage conique de type bassin de la première transmission (504), et entraîne en outre le culbuteur de transmission d'énergie de train épicycloïdal de type parapluie (804) ; et/ou l'énergie cinétique de rotation de la seconde unité d'entraînement (201) entraîne le culbuteur de transmission d'énergie de train épicycloïdal de type parapluie (804) du train d'engrenages différentiel (800) par l'intermédiaire de la seconde transmission (302) et de l'unité d'embrayage commandable (CL500, CL5012) ; et le train d'engrenages différentiel (800) est installé avec l'arbre de sortie de différentiel (311) et l'arbre de sortie de différentiel (312) pour sortir extérieurement de manière coaxiale, et le carter et le palier de l'ensemble train d'engrenages différentiel sont inclus ;
-- des unités d'embrayage commandables (CL101), (CL500, CL5012) : constituées d'une unité ou structure d'embrayage apte à remplir la fonction d'accouplement ou de désaccouplement de transmission, qui est entraînée par énergie humaine et/ou énergie électrique et/ou force magnétique et/ou puissance de machine et/ou pression atmosphérique et/ou pression hydraulique et/ou force centrifuge, et est équipée du côté d'entrée rotatif et du côté de sortie rotatif ;
-- un train d'engrenages différentiel (800) : associé à l'engrenage différentiel de type parapluie constitué de l'engrenage de type parapluie ou de la roue de friction de type parapluie, dans lequel la roue de sortie de différentiel gauche de type parapluie (801) et la roue de sortie de différentiel droite de type parapluie (802) ensemble s'accouplent au train épicycloïdal de type parapluie (803), et le train épicycloïdal de type parapluie (803) est installé au culbuteur de transmission d'énergie de train épicycloïdal de type parapluie (804) et transmet l'énergie cinétique de rotation entre le train d'engrenages différentiel (800) et la première transmission (301) et/ou la seconde transmission (302) par l'intermédiaire du culbuteur de transmission d'énergie de train épicycloïdal de type parapluie (804) ; et
les structures ci-dessus constituant la structure d'entraînement de train d'engrenages à double entraînement au côté d'entrée d'engrenage de type bassin, dans laquelle l'arbre de sortie de différentiel (311) et l'arbre de sortie de différentiel (312) de l'ensemble train d'engrenages différentiel (300) sont entraînés par la première unité d'entraînement (101) et/ou la seconde unité d'entraînement (201) pour mettre en oeuvre un fonctionnement différentiel.

7. Structure d'entraînement de train d'engrenages à double entraînement selon la revendication 6, comprenant en outre une unité d'embrayage commandable, installée entre la première unité d'entraînement et l'engrenage conique d'entrée (503) de la première transmission.

8. Structure d'entraînement de train d'engrenages à double entraînement selon la revendication 1, dans laquelle le culbuteur de transmission d'énergie de train épicycloïdal de type parapluie (804) est installé en outre aux deux côtés du train d'engrenages différentiel (800), dans lequel un côté du culbuteur de transmission d'énergie de train épicycloïdal de type parapluie (804) se combine à l'engrenage conique de type bassin de la première transmission (504), et l'autre côté s'accouple à la seconde transmission (302) par l'intermédiaire d'une unité d'embrayage commandable (CL500, CL5012), de façon à commander la transmission accouplée ou le désaccouplement entre la seconde transmission (302) et le train d'engrenages différentiel (800), les principaux composants comprenant :
-- un ensemble train d'engrenages différentiel (300) : l'unité d'embrayage commandable (CL500, CL5012) est installée entre le groupe de roues d'entraînement de la seconde transmission (302) et le culbuteur de transmission d'énergie de train épicycloïdal de type parapluie (804) pour commander le fonctionnement accouplé ou désaccouplé ; dans lequel l'engrenage conique d'entrée de première transmission (503) et l'engrenage conique de type bassin de la première transmission (504) constituent la première transmission (301), et la première unité d'entraînement (101), par l'intermédiaire de l'unité d'embrayage commandable (CL101), entraîne l'engrenage conique d'entrée de première transmission (503), puis l'engrenage conique d'entrée de première transmission (503) entraîne l'engrenage conique de type bassin de la première transmission (504), et entraîne en outre le culbuteur de transmission d'énergie de train épicycloïdal de type parapluie (804) ; et/ou l'énergie cinétique de rotation de la seconde unité d'entraînement (201) entraîne le culbuteur de transmission d'énergie de train épicycloïdal de type parapluie (804) du train d'engrenages différentiel (800) par l'intermédiaire de la seconde transmission (302) et de l'unité d'embrayage commandable (CL500, CL5012) ; et le train d'engrenages différentiel (800) est installé avec l'arbre de sortie de différentiel (311) et l'arbre de sortie de différentiel (312) pour sortir extérieurement de manière coaxiale, et est équipé du carter et du palier de l'ensemble train d'engrenages différentiel ;
-- des unités d'embrayage commandables (CL101), (CL500, CL5012) : constituées d'une unité ou structure d'embrayage apte à remplir la fonction d'accouplement ou de désaccouplement de transmission, qui est entraînée par énergie humaine et/ou énergie électrique et/ou force magnétique et/ou puissance de machine et/ou pression atmosphérique et/ou pression hydraulique et/ou force centrifuge, et est équipée du côté d'entrée rotatif et du côté de sortie rotatif ;
-- un train d'engrenages différentiel (800) : associé à l'engrenage différentiel de type parapluie constitué de l'engrenage de type parapluie ou de la roue de friction de type parapluie, dans lequel la roue de sortie de différentiel gauche de type parapluie (801) et la roue de sortie de différentiel droite de type parapluie (802) ensemble s'accouplent au train épicycloïdal de type parapluie (803), et le train épicycloïdal de type parapluie (803) est installé au culbuteur de transmission d'énergie de train épicycloïdal de type parapluie (804) et transmet l'énergie cinétique de rotation entre le train d'engrenages différentiel (800) et la première transmission (301) par l'intermédiaire du culbuteur de transmission d'énergie de train épicycloïdal de type parapluie (804), et/ou transmet l'énergie cinétique de rotation entre la seconde transmission (302) et le culbuteur de transmission d'énergie de train épicycloïdal de type parapluie (804) par l'intermédiaire de l'unité d'embrayage commandable (CL500) ; et
les structures ci-dessus constituant la structure d'entraînement de train d'engrenages à double entraînement au côté d'entrée d'engrenage de type bassin, dans laquelle l'arbre de sortie de différentiel (311) et l'arbre de sortie de différentiel (312) de l'ensemble train d'engrenages différentiel (300) sont entraînés par la première unité d'entraînement (101) et/ou la seconde unité d'entraînement (201) pour mettre en oeuvre un fonctionnement différentiel.

9. Structure d'entraînement de train d'engrenages à double entraînement au côté d'entrée d'engrenage de type bassin selon la revendication 6, dans laquelle l'unité d'embrayage commandable (CL5011) est en outre installée entre le culbuteur de transmission d'énergie de train épicycloïdal de type parapluie (804) et le groupe de roues d'entraînement de la première transmission, et l'unité d'embrayage commandable (CL5012) est en outre installée entre le culbuteur de transmission d'énergie de train épicycloïdal de type parapluie (804) et le groupe de roues d'entraînement de la seconde transmission (302), de façon à commander un fonctionnement accouplé ou désaccouplé dans diverses permutations et combinaisons entre l'unité d'embrayage commandable (CL5011) et l'unité d'embrayage commandable (CL5012) sur la base d'une fonction opérationnelle, les principaux composants comprenant :
-- un ensemble train d'engrenages différentiel (300) : équipé des unités d'embrayage commandables (CL5011) et (CL5012), dans lequel l'unité d'embrayage commandable (CL5011) est installée entre le culbuteur de transmission d'énergie de train épicycloïdal de type parapluie (804) et le groupe de roues d'entraînement de la première transmission, et l'unité d'embrayage commandable (CL5012) est installée entre le culbuteur de transmission d'énergie de train épicycloïdal de type parapluie (804) et le groupe de roues d'entraînement de la seconde transmission (302), de façon à commander le fonctionnement accouplé ou désaccouplé dans diverses permutations et combinaisons entre l'unité d'embrayage commandable (CL5011) et l'unité d'embrayage commandable (CL5012) sur la base d'une fonction opérationnelle, y compris que la première transmission (301) est constituée de l'engrenage conique d'entrée de première transmission (503) et de l'engrenage conique de type bassin de la première transmission (504), et la première unité d'entraînement (101) entraîne l'engrenage conique d'entrée de première transmission (503), puis l'engrenage conique d'entrée de première transmission (503) entraîne l'engrenage conique de type bassin de la première transmission (504), et entraîne en outre le culbuteur de transmission d'énergie de train épicycloïdal de type parapluie (804) par l'intermédiaire de l'unité d'embrayage commandable (CL5011) ; et/ou l'énergie cinétique de rotation de la seconde unité d'entraînement (201) entraîne le culbuteur de transmission d'énergie de train épicycloïdal de type parapluie (804) du train d'engrenages différentiel (800) par l'intermédiaire de la seconde transmission (302) et de l'unité d'embrayage commandable (CL5012) ; et le train d'engrenages différentiel (800) est installé avec l'arbre de sortie de différentiel (311) et l'arbre de sortie de différentiel (312) pour sortir extérieurement de manière coaxiale, et est équipé du carter et du palier de l'ensemble train d'engrenages différentiel ;
-- des unités d'embrayage commandables (CL5011), (CL5012) : constituées d'une unité ou structure d'embrayage apte à remplir la fonction d'accouplement ou de désaccouplement de transmission, qui est entraînée par énergie humaine et/ou énergie électrique et/ou force magnétique et/ou puissance de machine et/ou pression atmosphérique et/ou pression hydraulique et/ou force centrifuge, et est équipée du côté d'entrée rotatif et du côté de sortie rotatif ;
-- un train d'engrenages différentiel (800) : associé à l'engrenage différentiel de type parapluie constitué de l'engrenage de type parapluie ou de la roue de friction de type parapluie, dans lequel la roue de sortie de différentiel gauche de type parapluie (801) et la roue de sortie de différentiel droite de type parapluie (802) ensemble s'accouplent au train épicycloïdal de type parapluie (803), et le train épicycloïdal de type parapluie (803) est installé au culbuteur de transmission d'énergie de train épicycloïdal de type parapluie (804) et transmet l'énergie cinétique de rotation entre le culbuteur de transmission d'énergie de train épicycloïdal de type parapluie (804) et la première transmission (301) par l'intermédiaire de l'unité d'embrayage commandable (CL5011), et/ou transmet l'énergie cinétique de rotation entre le culbuteur de transmission d'énergie de train épicycloïdal de type parapluie (804) et la seconde transmission (302) par l'intermédiaire de l'unité d'embrayage commandable (CL5012) ; et
les structures ci-dessus constituant la structure d'entraînement de train d'engrenages à double entraînement au côté d'entrée d'engrenage de type bassin, dans laquelle l'arbre de sortie de différentiel (311) et l'arbre de sortie de différentiel (312) de l'ensemble train d'engrenages différentiel (300) sont entraînés par la première unité d'entraînement (101) et/ou la seconde unité d'entraînement (201) pour mettre en oeuvre un fonctionnement différentiel.

10. Structure d'entraînement de train d'engrenages à double entraînement au côté d'entrée d'engrenage de type bassin selon la revendication 8, comprenant en outre une unité d'embrayage commandable (CL5011) installée entre un côté du culbuteur de transmission d'énergie de train épicycloïdal de type parapluie (804) et l'engrenage conique de type bassin de la première transmission (504), alors que l'unité d'embrayage commandable (CL5012) est installée entre l'autre côté du culbuteur de transmission d'énergie de train épicycloïdal de type parapluie (804) et la seconde transmission (302), les principaux composants comprenant :
-- un ensemble train d'engrenages différentiel (300) : équipé des unités d'embrayage commandables (CL5011) et (CL5012), de façon à commander un fonctionnement accouplé ou désaccouplé dans diverses permutations et combinaisons entre l'unité d'embrayage commandable (CL5011) et l'unité d'embrayage commandable (CL5012) sur la base d'une fonction opérationnelle, y compris que la première transmission (301) est constituée de l'engrenage conique d'entrée de première transmission (503) et de l'engrenage conique de type bassin de la première transmission (504), et la première unité d'entraînement (101) entraîne l'engrenage conique d'entrée de première transmission (503), puis l'engrenage conique d'entrée de la première transmission (503) entraîne l'engrenage conique de type bassin de la première transmission (504), et entraîne en outre le culbuteur de transmission d'énergie de train épicycloïdal de type parapluie (804) par l'intermédiaire de l'unité d'embrayage commandable (CL5011) ; et/ou l'énergie cinétique de rotation de la seconde unité d'entraînement (201) entraîne le culbuteur de transmission d'énergie de train épicycloïdal de type parapluie (804) par l'intermédiaire de la seconde transmission (302) et de l'unité d'embrayage commandable (CL5012) ;
-- des unités d'embrayage commandables (CL5011), (CL5012) : constituées d'une unité ou structure d'embrayage apte à remplir la fonction d'accouplement ou de désaccouplement de transmission, qui est entraînée par énergie humaine et/ou énergie électrique et/ou force magnétique et/ou puissance de machine et/ou pression atmosphérique et/ou pression hydraulique et/ou force centrifuge, et est équipée du côté d'entrée rotatif et du côté de sortie rotatif ; et
-- un train d'engrenages différentiel (800) : transmet l'énergie cinétique de rotation entre le culbuteur de transmission d'énergie de train épicycloïdal de type parapluie (804) et la première transmission (301) par l'intermédiaire de l'unité d'embrayage commandable (CL5011) et/ou transmet l'énergie cinétique de rotation entre le culbuteur de transmission d'énergie de train épicycloïdal de type parapluie (804) et la seconde transmission (302) par l'intermédiaire de l'unité d'embrayage commandable (CL5012).

11. Ensemble d'entraînement de train d'engrenages à double entraînement selon l'une quelconque des revendications 6 à 10, dans lequel une transmission à vitesse variable est en outre installée entre la première unité d'entraînement (101), l'embrayage commandable (CL101) et la première transmission (301), de telle sorte que la première unité d'entraînement entraîne la première transmission par l'intermédiaire de l'embrayage commandable (CL101) et de la transmission à vitesse variable.

12. Structure d'entraînement de train d'engrenages à double entraînement, dans laquelle un culbuteur d'entrée de train d'engrenages différentiel (804) entraîné par l'engrenage conique de type bassin (504) dans un ensemble train d'engrenages différentiel (300) est réalisé pour être entraîné par deux ensembles de transmissions (301, 302), dans lesquels une première transmission (301) transmet de l'énergie cinétique de rotation entre le culbuteur d'entrée de train d'engrenages différentiel (804) et un moteur (101), et une seconde transmission (302) transmet de l'énergie cinétique de rotation entre le culbuteur d'entrée de train d'engrenages différentiel (804) et une seconde unité d'entraînement (201), et une ou les deux transmissions (301, 302) entraînent le culbuteur d'entrée de train d'engrenages différentiel (804), dans lequel le culbuteur de transmission d'énergie de train d'engrenages de type parapluie (804) du train d'engrenages différentiel (800) est installé aux deux côtés du train d'engrenages différentiel (800), la première transmission comprend un engrenage conique de type bassin (504) et un engrenage conique d'entrée (503), et la seconde transmission comprend un engrenage conique de type bassin (5042) et un engrenage conique d'entrée (507), les deux ensembles sont en séparation, l'engrenage conique d'entrée de la première transmission (503) étant entraîné par la première unité d'entraînement (101), puis passant à travers l'engrenage conique de type bassin de la première transmission (504) pour entraîner un côté du culbuteur de transmission d'énergie de train épicycloïdal de type parapluie (804), alors que l'engrenage conique d'entrée de seconde transmission (507) est entraîné par la seconde unité d'entraînement (201), puis par l'intermédiaire de l'engrenage conique de type bassin (5042) entraîne l'autre côté du culbuteur de transmission d'énergie de train épicycloïdal de type parapluie (804), le culbuteur de transmission d'énergie de train épicycloïdal de type parapluie (804) transmettant l'énergie cinétique de rotation du train d'engrenages différentiel (800), les principaux composants comprenant .
-- une unité d'embrayage commandable (CL101) : constituée d'une unité ou structure d'embrayage apte à remplir la fonction d'accouplement ou de désaccouplement de transmission, qui est entraînée par énergie humaine et/ou énergie électrique et/ou force magnétique et/ou puissance de machine et/ou pression atmosphérique et/ou pression hydraulique et/ou force centrifuge, et est équipée du côté d'entrée rotatif et du côté de sortie rotatif ;
-- un train d'engrenages différentiel (800) : associé à l'engrenage différentiel de type parapluie constitué de l'engrenage de type parapluie ou de la roue de friction de type parapluie, dans lequel la roue de sortie de différentiel gauche de type parapluie (801) et la roue de sortie de différentiel droite de type parapluie (802) ensemble s'accouplent au train épicycloïdal de type parapluie (803), et le train épicycloïdal de type parapluie (803) est installé au culbuteur de transmission d'énergie de train épicycloïdal de type parapluie (804) et transmet l'énergie cinétique de rotation entre le train d'engrenages différentiel (800) et la première transmission (301) et/ou la seconde transmission (302) par l'intermédiaire du culbuteur de transmission d'énergie de train épicycloïdal de type parapluie (804) ; et
les structures ci-dessus constituant la structure d'entraînement de train d'engrenages à double entraînement au côté d'entrée d'engrenage de type bassin, dans laquelle l'arbre de sortie de différentiel (311) et l'arbre de sortie de différentiel (312) de l'ensemble train d'engrenages différentiel (300) sont entraînés par la première unité d'entraînement (101) et/ou la seconde unité d'entraînement (201) pour mettre en oeuvre un fonctionnement différentiel.

13. Structure d'entraînement de train d'engrenages à double entraînement au côté d'entrée d'engrenage de type bassin selon la revendication 12, comprenant en outre une unité d'embrayage commandable (CL500, CL5012) installée entre l'engrenage conique de type bassin de la seconde transmission (5042) et le culbuteur de transmission d'énergie de train épicycloïdal de type parapluie (804), dans laquelle :
l'engrenage conique d'entrée de seconde transmission (507) est entraîné par la seconde unité d'entraînement (201), puis passe par l'engrenage conique de type bassin de la seconde transmission (5042) pour entraîner l'unité d'embrayage commandable (CL500, CL5012) et pour entraîner en outre l'autre côté du culbuteur de transmission d'énergie de train épicycloïdal de type parapluie (804) ; et
-- une unité d'embrayage commandable (CL500, CL5012) est constituée de l'unité ou structure d'embrayage apte à remplir la fonction d'accouplement ou de désaccouplement de transmission, qui est entraînée par énergie humaine et/ou énergie électrique et/ou force magnétique et/ou puissance de machine et/ou pression atmosphérique et/ou pression hydraulique et/ou force centrifuge, et est équipée du côté d'entrée rotatif et du côté de sortie rotatif ;
l'énergie cinétique de rotation est transmise entre le train d'engrenages différentiel (800) et la seconde transmission (302) à travers l'unité d'embrayage commandable (CL500, CL5012) ; et

14. Structure d'entraînement de train d'engrenages à double entraînement au côté d'entrée d'engrenage de type bassin selon la revendication 13, comprenant en outre une unité d'embrayage commandable (CL5011) installée entre l'engrenage conique de type bassin de la première transmission (504) et le culbuteur de transmission d'énergie de train épicycloïdal de type parapluie (804),
dans laquelle l'engrenage conique d'entrée de première transmission (503) est entraîné par la première unité d'entraînement (101), puis passe par l'engrenage conique de type bassin de la première transmission (504) pour entraîner l'unité d'embrayage commandable (CL5011), et entraîne en outre un côté du culbuteur de transmission d'énergie de train épicycloïdal de type parapluie (804), alors que l'engrenage conique d'entrée de seconde transmission (507) est entraîné par la seconde unité d'entraînement (201), puis passe par l'engrenage conique de type bassin de la seconde transmission (5042) pour entraîner l'unité d'embrayage commandable (CL5012) et pour entraîner en outre l'autre côté du culbuteur de transmission d'énergie de train épicycloïdal de type parapluie (804) ;
-- des unités d'embrayage commandables (CL5011) sont constituées de l'unité ou structure d'embrayage apte à remplir la fonction d'accouplement ou de désaccouplement de transmission, qui est entraînée par énergie humaine et/ou énergie électrique et/ou force magnétique et/ou puissance de machine et/ou pression atmosphérique et/ou pression hydraulique et/ou force centrifuge, et est équipée du côté d'entrée rotatif et du côté de sortie rotatif ;
-- un train d'engrenages différentiel (800) transmet de l'énergie cinétique de rotation entre le culbuteur de transmission d'énergie de train épicycloïdal de type parapluie (804) et la première transmission (301) par l'intermédiaire de l'unité d'embrayage commandable (CL5011) et/ou transmet de l'énergie cinétique de rotation entre le culbuteur de transmission d'énergie de train épicycloïdal de type parapluie (804) et la seconde transmission (302) par l'intermédiaire de l'unité d'embrayage commandable (CL5012).
